# EUROPEAN PATENT APPLICATION

(11) **EP 4 262 253 A1**
(43) Date of publication of application: **18.10.2023**
(21) Application number: 22742284.7
(22) Date of filing: 25.01.2022
(51) Int. Cl.: H04W 4/50

(54) **PACKET TRANSMISSION METHOD AND RELATED APPARATUS**

(30) Priority: 25.01.2021 CN 202110098204; 30.04.2021 CN 202110482552
(71) Applicant: Huawei Technologies Co., Ltd., Shenzhen, Guangdong 518129 (CN)
(72) Inventor: ZHANG, Yinxi, Shenzhen, Guangdong 518129 (CN); ZHOU, Jun, Shenzhen, Guangdong 518129 (CN); LIANG, Xixi, Shenzhen, Guangdong 518129 (CN)
(74) Representative: Pfenning, Meinig & Partner mbB
(86) International application number: PCT/CN2022/073676
(87) International publication number: WO 2022/156807

(57) **Abstract**

Embodiments of this application disclose a packet transmission method and a related apparatus. The method includes: A network device receives a request message from a terminal device, where the request message includes a first field, the first field indicates identity information of the terminal device, and the request message is used to request the terminal device to establish a communication connection to the network device; and the network device sends a notification message to a management platform, where the notification message includes a second field, the second field indicates the terminal device, and the notification message indicates the management platform to establish a communication connection to an application server. Fields with specific meanings and the management platform are introduced to effectively resolve a problem of access conflict between devices from a plurality of vendors and implement interconnection between the devices from the plurality of vendors.

## Description

This application claims priority to Chinese Patent Application No. 202110098204.3, filed with the China National Intellectual Property Administration on January 25, 2021 and entitled "INTERNET OF THINGS COMMUNICATION METHOD, APPARATUS, AND SYSTEM", and claims priority to Chinese Patent Application No. 202110482552.0, filed with the China National Intellectual Property Administration on April 30, 2021 and entitled "PACKET TRANSMISSION METHOD AND RELATED APPARATUS", which are incorporated herein by reference in their entireties.

### TECHNICAL FIELD

This application relates to the field of communication technologies, and in particular, to a packet transmission method and a related apparatus.

### BACKGROUND

With development of technologies, wireless internet of things (Internet of things, IoT) systems are widely used in various industries, such as a baby anti-theft system and an intelligent infusion system in the medical field, an asset management system in a smart campus, and an electronic shelf label system in the shopping mall and supermarket industry. These wireless internet of things systems effectively reduce enterprise labor costs and improve enterprise service efficiency.

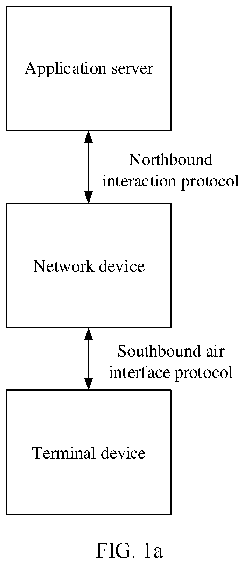

For an architecture of an existing wireless internet of things system, refer to FIG. 1a. FIG. 1a is a schematic diagram of an architecture of an internet of things system according to an embodiment of this application. The internet of things system includes a terminal device, a network device, and an application server. For example, the terminal device may be an electronic shelf label for a shopping mall/supermarket, a mother and baby wristband for medical care, or an asset tag (tag) for a smart campus. The network device functions as a gateway between the terminal device and the application server, and is configured to access the terminal device. A southbound air interface protocol between the network device and the terminal device usually uses a short-range internet of things technology, for example, Zigbee (Zigbee), a radio frequency identification (radio frequency identification, RFID) technology, or a Bluetooth low energy (Bluetooth Low Energy, BLE) technology. The application server is configured to deploy various application systems, and a northbound interaction protocol between the application server and the network device usually uses a user datagram protocol (User Datagram Protocol, UDP), a hypertext transfer protocol (Hypertext Transfer Protocol, HTTP), or the like. The terminal device, the network device, and the application server may be referred to as a set of vertical systems.

When a user needs to use a plurality of application systems, network devices of different vendors cannot communicate with application servers. Therefore, a plurality of sets of vertical systems usually need to be deployed at the same time. Consequently, device deployment overheads are large. In addition, radio frequency signals generated by network devices of the plurality of sets of vertical systems in a same area interfere with each other, which affects communication quality.

### SUMMARY

According to a first aspect, an embodiment of this application provides a packet transmission method, and the method is applied to a network device. The method includes: The network device receives a request message from a terminal device, where the request message includes a first field, the first field indicates identity information of the terminal device, and the request message is used to request the terminal device to establish a communication connection to the network device; and the network device sends a notification message to a management platform, where the notification message includes a second field, the second field indicates the terminal device, and the notification message indicates the management platform to establish a communication connection to an application server, so that the application server provides a service for the terminal device.

In this embodiment of this application, the network device receives the request message from the terminal device. The request message includes the first field, and the first field indicates the terminal device to establish a communication connection to the network device. The network device sends the notification message to the management platform. The notification message includes the second field, the second field indicates the terminal device, and the notification message indicates the management platform to establish a communication connection to the application server, so that the application server provides a service for the terminal device. According to the foregoing method, after the network device learns that the terminal device establishes a communication connection to the network device, the network device notifies the management platform to establish a communication connection to the application server, and the application server provides a service for the terminal device. A valid communication connection is established between the terminal device and the application server, so that the application server can provide a service for the terminal device. The second field indicates the terminal device, and the management platform identifies the second field, so that the corresponding application server provides a service for the corresponding terminal device. Fields with specific meanings and the management platform are introduced to effectively resolve a problem of access conflict between devices from a plurality of vendors and implement interconnection between the devices from the plurality of vendors. In addition, a problem of mutual interference between radio frequency signals generated by different network devices in a plurality of vertical devices can be resolved. Finally, automatic deployment of an internet of things system is implemented and communication quality is improved.

With reference to the first aspect, in a possible implementation of the first aspect, the network device performs compliance check on the terminal device based on the first field. Specifically, the network device performs compliance check on the terminal device based on the first field. The compliance check includes but is not limited to identity check of the terminal device or capability check of the terminal device.

Specifically, the identity check may be admission check of the terminal device. A vendor type of the terminal device is determined based on the first field, and the network device allows access of a device of a specific vendor. Alternatively, a device type of the terminal device is determined based on the first field, and the network device allows access of a terminal device of a specific device type. Alternatively, a device type of the terminal device and a vendor type of the terminal device are determined based on the first field, and the network device allows access of a terminal device of a specific vendor and a specific device type. For example, a current network device allows access of only a smart wristband of a vendor A. When a first field of a terminal device A indicates that the terminal device is a smart wristband of the vendor A, the network device completes compliance check on the terminal device A based on the first field, and allows access of the terminal device A.

The capability check includes but is not limited to: checking whether the terminal device supports an encryption capability, or checking a type of an encryption algorithm used by the terminal device. For example, the network device allows access of only a terminal device having an encryption capability. The network device determines the device type and the vendor type of the terminal device based on the first field, and further determines whether the terminal device supports an encryption capability. When the terminal device supports the encryption capability, the network device allows access of the terminal device. The network device allows access of terminal devices using encryption algorithms A and B. The network device determines the device type and the vendor type of the terminal device based on the first field, and further determines the encryption algorithm supported by the terminal device. When the terminal device supports only an encryption algorithm C, the network device rejects access of the terminal device.

Optionally, the first field may further include a dedicated field, and the dedicated field indicates whether the terminal device supports an encryption capability and/or a type of a used encryption algorithm.

With reference to the first aspect, in a possible implementation of the first aspect, the first field includes a first subfield and a second subfield, the first subfield indicates a vendor type of the terminal device, and the second subfield indicates a device type of the terminal device. For example, the first field is "0304", and the first field indicates that the terminal device is a doctor workstation of a vendor C. Main functions of the doctor workstation are to help outpatient doctors write and maintain routine prescriptions or medical records in a standard and highly efficient manner, and query drug information. For example, the first field is "0101", and the first field indicates that the terminal device is a wristband of a vendor A.

In another possible implementation, the first field indicates a vendor type of the terminal device and a device type of the terminal device. For example, the first field is "11111", and the first field indicates that the terminal device is a baby wristband of a vendor D. According to the foregoing method, the first field conveniently indicates the vendor type of the terminal device and the device type of the terminal device. This reduces occupation of communication resources.

With reference to the first aspect, in a possible implementation of the first aspect, the second field is the same as the first field; or the second field is determined based on the first field.

With reference to the first aspect, in a possible implementation of the first aspect, the network device includes one or more plug-in cards. The network device is connected to at least one plug-in card in a pluggable manner. The network device dynamically adds/deletes one or more service capabilities by adding/deleting the at least one plug-in card. The service capability includes one or more of the following: a communication frequency band, a communication protocol, a communication bandwidth, or a communication rate.

For example, the network device is connected to a plug-in card A through a pluggable interface. The network device is connected to the plug-in card A. This increases a service capability of a Bluetooth communication frequency band, and improves a communication bandwidth and a communication rate.

Specifically, the network device may further support an extension function of a hardware module, and the hardware module may be referred to as a plug-in card. The plug-in card may support a plurality of service capabilities, or may support one service capability. For example, the plug-in card A supports both a Bluetooth protocol and a Zigbee protocol. A plug-in card B supports an RFID protocol.

These different plug-in cards may support the same service capability but different vendors. For example, the plug-in card A supports a Bluetooth protocol, and the plug-in card B supports the Bluetooth protocol. The plug-in card A supports a vendor A, and the plug-in card B supports a vendor B.

The plug-in cards may alternatively support the same service capability, the same vendor, but different device types. For example, the plug-in card A supports a Bluetooth protocol, and the plug-in card B supports the Bluetooth protocol. The plug-in card A supports a vendor A, and the plug-in card B supports the vendor A. The plug-in card A supports a smart wristband, and the plug-in card B supports a doctor workstation.

The plug-in card may alternatively support different service capabilities and different vendors. This is not limited herein.

Optionally, the network device includes a wireless access point (access point, AP), the wireless access point includes one or more interfaces for establishing a communication connection to the plug-in card, and the wireless access point establishes a communication connection to the one or more plug-in cards through the interface. Different plug-in cards may implement different functions. The following provides an example for description.

For example, a plug-in card A, a plug-in card B, and a plug-in card C are all communication modules that support a Bluetooth protocol. The plug-in card A supports a terminal device of a vendor A, the plug-in card B supports a terminal device of a vendor B, and the plug-in card C supports a terminal device of a vendor C.

In still another example, a plug-in card A, a plug-in card B, and a plug-in card C are all communication modules that support a vendor A, a vendor B, and a vendor C. The plug-in card A is a communication module that supports a Bluetooth protocol, the plug-in card B is a communication module that supports a Zigbee (Zigbee) protocol, and the plug-in card C is a communication module that supports a radio frequency identification RFID protocol.

In still another example, a plug-in card A, a plug-in card B, and a plug-in card C are all communication modules that support a Bluetooth protocol of a vendor A. The plug-in card A is configured to establish a communication connection to a baby wristband of the vendor A, the plug-in card B is configured to establish a communication connection to a doctor workstation of the vendor A, and the plug-in card C is configured to establish a communication connection to a smart bed card of the vendor A.

Optionally, the plug-in card is configured to implement the method according to any one of the implementations of the first aspect.

According to a second aspect, an embodiment of this application provides a packet transmission method, and the method is applied to a terminal device. The method includes: The terminal device sends a request message to a network device. The request message includes a first field, the first field indicates identity information of the terminal device, the request message is used to request the terminal device to establish a communication connection to the network device, and the identity information of the terminal device includes a vendor type of the terminal device and a device type of the terminal device.

In this embodiment of this application, the network device receives the request message from the terminal device. The request message includes the first field, the first field indicates the terminal device to establish a communication connection to the network device, the first field indicates the identity information of the terminal device, and the request message is used to request the terminal device to establish a communication connection to the network device. According to the foregoing method, after the network device learns that the terminal device establishes a communication connection to the network device, the network device notifies a management platform to establish a communication connection to an application server, and the application server provides a service for the terminal device. A valid communication connection is established between the terminal device and the application server, so that the application server can provide a service for the terminal device. Fields with specific meanings and the management platform are introduced to effectively resolve a problem of access conflict between devices from a plurality of vendors and implement interconnection between the devices from the plurality of vendors. In addition, a problem of mutual interference between radio frequency signals generated by different network devices in a plurality of vertical devices can be resolved. Finally, automatic deployment of an internet of things system is implemented and communication quality is improved.

With reference to the second aspect, in a possible implementation of the second aspect, the first field includes a first subfield and a second subfield, the first subfield indicates a vendor type of the terminal device, and the second subfield indicates a device type of the terminal device. For example, the first field is "0304", and the first field indicates that the terminal device is a doctor workstation of a vendor C. Main functions of the doctor workstation are to help outpatient doctors write and maintain routine prescriptions or medical records in a standard and highly efficient manner, and query drug information. For example, the first field is "0101", and the first field indicates that the terminal device is a wristband of a vendor A.

In another possible implementation, the first field indicates a vendor type of the terminal device and a device type of the terminal device. For example, the first field is "11111", and the first field indicates that the terminal device is a baby wristband of a vendor D. According to the foregoing method, the first field conveniently indicates the vendor type of the terminal device and the device type of the terminal device. This reduces occupation of communication resources.

With reference to the second aspect, in a possible implementation of the second aspect, the identity information of the terminal device further includes an air interface medium access control address (media access control address, MAC Address) of the terminal device. For example, when the terminal device communicates with the network device by using a Bluetooth protocol, the identity information of the terminal device includes an air interface MAC address. Alternatively, address information of the terminal device may be an internet protocol address (Internet Protocol Address, IP Address) of the terminal device or an electronic product code (Electronic Product Code, EPC) of the terminal device. This is not limited herein.

With reference to the second aspect, in a possible implementation of the second aspect, the terminal device is an internet of things terminal device. For example, the terminal device may be a smart tag, a smart wristband, a doctor workstation, an infusion pump, a ventilator, or the like. This is not limited herein.

According to a third aspect, an embodiment of this application provides a packet transmission method, and the method is applied to a management platform. The method includes: The management platform receives a notification message from a network device. The notification message includes a second field, the second field indicates a terminal device, and the notification message indicates the management platform to establish a communication connection to an application server, so that the application server provides a service for the terminal device. The second field is determined by the network device based on a first field, and the first field indicates identity information of the terminal device. The management platform determines the application server based on the second field.

In this embodiment of this application, the network device receives the request message from the terminal device. The request message includes the first field, and the first field indicates the terminal device to establish a communication connection to the network device. The network device sends the notification message to the management platform. The notification message includes the second field, the second field indicates the terminal device, and the notification message indicates the management platform to establish a communication connection to the application server, so that the application server provides a service for the terminal device. The second field is determined by the network device based on the first field, the first field indicates the identity information of the terminal device, and the management platform determines the application server based on the second field. According to the foregoing method, after the network device learns that the terminal device establishes a communication connection to the network device, the network device notifies the management platform to establish a communication connection to the application server, and the management platform determines the server based on the second field. The application server provides a service for the terminal device. A valid communication connection is established between the terminal device and the application server, so that the application server can provide a service for the terminal device. The second field indicates the terminal device, and the management platform identifies the second field, so that the corresponding application server provides a service for the corresponding terminal device. Fields with specific meanings and the management platform are introduced to effectively resolve a problem of access conflict between devices from a plurality of vendors and implement interconnection between the devices from the plurality of vendors. In addition, a problem of mutual interference between radio frequency signals generated by different network devices in a plurality of vertical devices can be resolved. Finally, automatic deployment of an internet of things system is implemented and communication quality is improved.

With reference to the third aspect, in a possible implementation of the third aspect, the method further includes: The management platform sends a first uplink packet to the application server. The first uplink packet includes the second field, and the second field indicates the terminal device.

Further, after the management platform receives a second uplink packet from the network device (the second uplink packet is generated based on a third uplink packet sent by the terminal device to the network device), the management platform generates the first uplink packet based on the second uplink packet. The following describes the first uplink packet in detail: The first uplink packet includes the second field, and the second field indicates the terminal device.

In a possible implementation, the second field is the same as the first field. In other words, the second field further indicates the identity information of the terminal device. The second field includes a first subfield and a second subfield, and the second field indicates a vendor type of the terminal device and a device type of the terminal device.

In another possible implementation, the second field is another field indicating the first field. The management platform and the application server separately maintain an association relationship table between the second field and the first field. The application server and the management platform may determine the corresponding first field based on the second field, and further determines the vendor type and the device type that are of the terminal device and that are indicated by the first field.

With reference to the third aspect, in a possible implementation of the third aspect, the first field includes a first subfield and a second subfield, the first subfield indicates a vendor type of the terminal device, and the second subfield indicates a device type of the terminal device. For example, the first field is "0304", and the first field indicates that the terminal device is a doctor workstation of a vendor C. Main functions of the doctor workstation are to help outpatient doctors write and maintain routine prescriptions or medical records in a standard and highly efficient manner, and query drug information. For example, the first field is "0101", and the first field indicates that the terminal device is a wristband of a vendor A.

In another possible implementation, the first field indicates a vendor type of the terminal device and a device type of the terminal device. For example, the first field is "11111", and the first field indicates that the terminal device is a baby wristband of a vendor D. According to the foregoing method, the first field can conveniently indicate the vendor type of the terminal device and the device type of the terminal device. This reduces occupation of communication resources.

With reference to the third aspect, in a possible implementation of the third aspect, the second field is the same as the first field; or the second field is determined based on the first field.

With reference to the third aspect, in a possible implementation of the third aspect, the method further includes: The first uplink packet includes a fourth field, the fourth field indicates a packet type, and the packet type includes data, signaling, or another type. The first uplink packet includes a fourth field, the fourth field indicates a packet type, and the packet type includes data, signaling, or another type. The another type may be reserved (reserved). For example, the first uplink packet may be a protocol packet, or the first uplink packet may be a data packet. When the fourth field in the first uplink packet indicates that the packet type is data, the first uplink packet is a data packet.

When the fourth field indicates that the packet type is signaling, the first uplink packet further includes a third field, the third field indicates a connection status between the terminal device and the network device, and the connection status includes connection succeeded or connection disconnected. Optionally, the third field further indicates whether the packet is a heartbeat packet.

With reference to the third aspect, in a possible implementation of the third aspect, the first uplink packet includes a fifth field, and the fifth field indicates a protocol type used for establishing a connection between the terminal device and the network device. Specifically, the first uplink packet includes the fifth field, and the fifth field indicates the protocol type used for establishing a connection between the terminal device and the network device. When the protocol type used for establishing a connection between the terminal device and the network device is a Bluetooth (or Bluetooth low energy) protocol, the first uplink packet further includes an air interface MAC address of the terminal device. The air interface MAC address refers to a group of 48-bit (6-byte) data, and is a unique identifier of a Bluetooth device (that is, the terminal device).

With reference to the third aspect, in a possible implementation of the third aspect, the first uplink packet further includes a first timestamp, and the first timestamp indicates a time at which the management platform sends the first uplink packet.

With reference to the third aspect, in a possible implementation of the third aspect, the method further includes: The management platform receives a first downlink packet from the application server, where the first downlink packet includes the second field, and the second field indicates the terminal device; and the management platform generates a second downlink packet based on the first downlink packet, where the second downlink packet includes the second field, and a destination of the second downlink packet is the network device. Further, after receiving the first downlink packet, the management platform generates the second downlink packet based on the first downlink packet. The destination of the second downlink packet is the network device.

In a possible implementation, the management platform determines the corresponding terminal device based on the second field included in the first downlink packet. Further, the network device that provides a communication service for the terminal device is determined.

In still another possible implementation, the management platform determines the terminal device based on address information of the terminal device or the network device included in the first downlink packet, and further determines the network device that provides a communication service for the terminal device.

The management platform generates the second downlink packet based on the first downlink packet, and the second downlink packet includes the second field. A valid payload of the second downlink packet includes a valid payload of the first downlink packet. Optionally, a packet structure of the second downlink packet is similar to a packet structure of the first downlink packet. For example, the second downlink packet includes the fourth field. Details are not described herein again.

With reference to the third aspect, in a possible implementation of the third aspect, the first downlink packet includes the second field, and the second field indicates the terminal device.

In a possible implementation, the second field is the same as the first field. In other words, the second field further indicates the identity information of the terminal device. The second field includes a first subfield and a second subfield, and the second field indicates a vendor type of the terminal device and a device type of the terminal device.

In another possible implementation, the second field is another field indicating the first field. The management platform and the application server separately maintain an association relationship table between the second field and the first field. The application server and the management platform may determine the corresponding first field based on the second field, and further determines the vendor type and the device type that are of the terminal device and that are indicated by the first field.

With reference to the third aspect, in a possible implementation of the third aspect, the first downlink packet includes a fourth field, the fourth field indicates a packet type, and the packet type includes data, signaling, or another type. The another type may be reserved (reserved).

With reference to the third aspect, in a possible implementation of the third aspect, the first downlink packet includes a fifth field, and the fifth field indicates a protocol type used for establishing a connection between the terminal device and the network device. When the protocol type used for establishing a connection between the terminal device and the network device is Bluetooth (or Bluetooth low energy), the first downlink packet further includes an air interface MAC address of the terminal device. The air interface MAC address refers to a group of 48-bit (6-byte) data, and is a unique identifier of a Bluetooth device (that is, the terminal device).

With reference to the third aspect, in a possible implementation of the third aspect, the first downlink packet further includes a second timestamp, and the second timestamp indicates a time at which the application server sends the first downlink packet.

With reference to the third aspect, in a possible implementation of the third aspect, that the management platform determines the application server based on the second field includes: The management platform determines the vendor type of the terminal device and the device type of the terminal device based on the second field; the management platform determines the application server based on the vendor type of the terminal device and the device type of the terminal device; and the management platform generates an association relationship between the terminal device, the network device, and the application server.

Specifically, in a possible implementation, an association relationship between the vendor type of the terminal device, the device type of the terminal device, and the application server is preconfigured in the management platform. After determining the vendor type and the device type of the terminal device based on the notification message from the network device, the management platform determines, from the preconfigured association relationship, the application server corresponding to the terminal device.

In another possible implementation, the notification message carries the vendor type of the terminal device, the device type of the terminal device, and related identification information of the application server. The related identification information of the application server includes but is not limited to address information of the application server, for example, an IP address of the application server. The management platform determines the corresponding application server based on the notification message.

According to a fourth aspect, an embodiment of this application provides a packet transmission method, including: A network device receives a request message from a terminal device, where the request message includes a first field, the first field indicates identity information of the terminal device, and the request message is used to request the terminal device to establish a communication connection to the network device; the network device determines an application server based on the request message, so that the application server provides a service for the terminal device; and the network device sends a first uplink packet to the application server, where the first uplink packet includes a second field, and the second field indicates the terminal device.

In this embodiment of this application, the network device receives the request message from the terminal device, where the request message includes the first field, and the first field indicates the terminal device to establish a communication connection to the network device; and the network device sends the first uplink packet to the application server, where the first uplink packet includes the second field, and the second field indicates the terminal device, so that the application server provides a service for the terminal device. According to the foregoing method, after the network device learns that the terminal device establishes a communication connection to the network device, the network device establishes a communication connection to the application server, and the application server provides a service for the terminal device. A valid communication connection is established between the terminal device and the application server, so that the application server can provide a service for the terminal device. The first field indicates the identity information of the terminal device, and the network device identifies the first field, so that the corresponding application server provides a service for the corresponding terminal device. Fields with specific meanings are introduced to effectively resolve a problem of access conflict between devices from a plurality of vendors and implement interconnection between the devices from the plurality of vendors. In addition, a problem of mutual interference between radio frequency signals generated by different network devices in a plurality of vertical devices can be resolved. Finally, automatic deployment of an internet of things system is implemented and communication quality is improved.

With reference to the fourth aspect, in a possible implementation of the fourth aspect, the network device performs compliance check on the terminal device based on the first field. The compliance check includes identity check and/or capability check.

With reference to the fourth aspect, in a possible implementation of the fourth aspect, the identity information of the terminal device includes a vendor type of the terminal device and a device type of the terminal device.

The first field includes a first subfield and a second subfield, the first subfield indicates a vendor type of the terminal device, and the second subfield indicates a device type of the terminal device. For example, the first field is "0304", and the first field indicates that the terminal device is a doctor workstation of a vendor C. Main functions of the doctor workstation are to help outpatient doctors write and maintain routine prescriptions or medical records in a standard and highly efficient manner, and query drug information. For example, the first field is "0101 ", and the first field indicates that the terminal device is a wristband of a vendor A.

In another possible implementation, the first field indicates a vendor type of the terminal device and a device type of the terminal device. For example, the first field is "11111", and the first field indicates that the terminal device is a baby wristband of a vendor D. According to the foregoing method, the first field conveniently indicates the vendor type of the terminal device and the device type of the terminal device. This reduces occupation of communication resources.

With reference to the fourth aspect, in a possible implementation of the fourth aspect, the second field is the same as the first field; or the second field is determined based on the first field.

With reference to the fourth aspect, in a possible implementation of the fourth aspect, the first uplink packet includes a fourth field, the fourth field indicates a packet type, and the packet type includes data, signaling, or another type.

The first uplink packet includes a fourth field, the fourth field indicates a packet type, and the packet type includes data, signaling, or another type. The another type may be reserved (reserved).

When the fourth field indicates that the packet type is signaling, the first uplink packet further includes a third field, the third field indicates a connection status between the terminal device and the network device, and the connection status includes connection succeeded or connection disconnected. Optionally, the third field further indicates whether the packet is a heartbeat packet.

With reference to the fourth aspect, in a possible implementation of the fourth aspect, the first uplink packet includes a fifth field, and the fifth field indicates a protocol type used for establishing a connection between the terminal device and the network device. Specifically, the first uplink packet includes the fifth field, and the fifth field indicates the protocol type used for establishing a connection between the terminal device and the network device. When the fifth field indicates that the protocol type used for establishing a connection between the terminal device and the network device is a Bluetooth (or Bluetooth low energy) protocol connection, the first uplink packet further includes an air interface MAC address of the terminal device. The air interface MAC address refers to a group of 48-bit (6-byte) data, and is a unique identifier of a Bluetooth device (that is, the terminal device).

With reference to the fourth aspect, in a possible implementation of the fourth aspect, when the fourth field indicates that the packet type is signaling, the first uplink packet further includes a third field, the third field indicates a connection status between the terminal device and the network device, and the connection status includes connection succeeded or connection disconnected.

With reference to the fourth aspect, in a possible implementation of the fourth aspect, the network device receives a first downlink packet from the application server, where the first downlink packet includes the second field, and the second field indicates the terminal device; and the network device generates a second downlink packet based on the first downlink packet, where the second downlink packet includes the second field, and a destination of the second downlink packet is the terminal device.

In a possible implementation, the network device determines the corresponding terminal device based on the second field included in the first downlink packet. In still another possible implementation, the network device determines the terminal device based on address information of the terminal device or the network device included in the first downlink packet.

The network device generates the second downlink packet based on the first downlink packet, and the second downlink packet includes the second field. A valid payload of the second downlink packet includes a valid payload of the first downlink packet. Optionally, a packet structure of the second downlink packet is similar to a packet structure of the first downlink packet. For example, the second downlink packet includes the fourth field. Details are not described herein again.

With reference to the fourth aspect, in a possible implementation of the fourth aspect, the first downlink packet includes a fourth field, the fourth field indicates a packet type, and the packet type includes data, signaling, or another type. The another type may be reserved (reserved).

With reference to the fourth aspect, in a possible implementation of the fourth aspect, that the network device determines an application server based on the request message includes: The network device determines the vendor type of the terminal device and the device type of the terminal device based on the request message; the network device determines the application server based on the vendor type of the terminal device and the device type of the terminal device; and the network device generates an association relationship between the terminal device, the network device, and the application server.

Specifically, in a possible implementation, an association relationship between the vendor type of the terminal device, the device type of the terminal device, and the application server is preconfigured in the network device. After determining the vendor type and the device type of the terminal device based on the request message from the terminal device, the network device determines, from the preconfigured association relationship, the application server corresponding to the terminal device.

In another possible implementation, the request message carries the vendor type of the terminal device, the device type of the terminal device, and related identification information of the application server. The related identification information of the application server includes but is not limited to address information of the application server, for example, an IP address of the application server. The network device determines the corresponding application server based on the request message.

With reference to the fourth aspect, in a possible implementation of the fourth aspect, the network device is connected to at least one plug-in card in a pluggable manner. The network device dynamically adds/deletes one or more service capabilities by adding/deleting the at least one plug-in card. The service capability includes one or more of the following: a communication frequency band, a communication protocol, a communication bandwidth, or a communication rate.

According to a fifth aspect, an embodiment of this application provides a communication apparatus, including:
a transceiver module, configured to receive a request message from a terminal device, where the request message includes a first field, the first field indicates identity information of the terminal device, and the request message is used to request the terminal device to establish a communication connection to a network device, where
the transceiver module is further configured to send a notification message to a management platform, where the notification message includes a second field, the second field indicates the terminal device, and the notification message indicates the management platform to establish a communication connection to an application server, so that the application server provides a service for the terminal device.

In a possible implementation, the network device performs compliance check on the terminal device based on the first field.

In a possible implementation, the first field includes a first subfield and a second subfield, the first subfield indicates a vendor type of the terminal device, and the second subfield indicates a device type of the terminal device.

In a possible implementation, the second field is the same as the first field; or the second field is determined based on the first field.

In a possible implementation, the network device includes a plug-in card and a wireless access point AP, where the plug-in card is configured to implement the communication apparatus according to any one of the implementations of the fifth aspect, and the AP is configured to transmit a second downlink packet and/or a second uplink packet.

In a possible implementation, the network device is connected to at least one plug-in card in a pluggable manner. The network device dynamically adds/deletes one or more service capabilities by adding/deleting the at least one plug-in card. The service capability includes one or more of the following: a communication frequency band, a communication protocol, a communication bandwidth, or a communication rate.

According to a sixth aspect, an embodiment of this application provides a communication apparatus, including:
a transceiver module, configured to send a request message to a network device, where the request message includes a first field, the first field indicates identity information of a terminal device, and the request message is used to request the terminal device to establish a communication connection to the network device.

In a possible implementation, the network device performs compliance check on the terminal device based on the first field.

In a possible implementation, the first field includes a first subfield and a second subfield, the first subfield indicates a vendor type of the terminal device, and the second subfield indicates a device type of the terminal.

Alternatively, the identity information of the terminal device includes a vendor type of the terminal device and a device type of the terminal device.

According to a seventh aspect, an embodiment of this application provides a communication apparatus, including:
a transceiver module, configured to receive a notification message from a network device, where the notification message includes a second field, and the notification message indicates a management platform to establish a communication connection to an application server, so that the application server provides a service for a terminal device; and
a processing module, configured to determine the application server based on the notification message.

In a possible implementation, the transceiver module is further configured to send a first uplink packet to the application server. The first uplink packet includes the second field, and the second field indicates the terminal device.

In a possible implementation, the first field includes a first subfield and a second subfield, the first subfield indicates a vendor type of the terminal device, and the second subfield indicates a device type of the terminal device.

In a possible implementation, the second field is the same as the first field; or the second field is determined based on the first field.

In a possible implementation, the first uplink packet includes a fourth field, the fourth field indicates a packet type, and the packet type includes data, signaling, or another type.

In a possible implementation, the first uplink packet includes a fifth field, that is, a protocol type used for establishing a connection between the terminal device and the network device.

In a possible implementation, when the fourth field indicates that the packet type is signaling, the first uplink packet further includes a third field, the third field indicates a connection status between the terminal device and the network device, and the connection status includes connection succeeded or connection disconnected.

In a possible implementation, the third field further indicates whether the packet is a heartbeat packet.

In a possible implementation, when the terminal device establishes a connection to the network device by using a Bluetooth protocol, the first uplink packet further includes an air interface MAC address of the terminal device.

In a possible implementation, the transceiver module is further configured to receive a first downlink packet from the application server, where the first downlink packet includes the second field, and the second field indicates the terminal device; and
the processing module is configured to generate a second downlink packet based on the first downlink packet, where the second downlink packet includes the second field, and a destination of the second downlink packet is the network device.

In a possible implementation, the first downlink packet includes a fourth field, the fourth field indicates a packet type, and the packet type includes data, signaling, or another type.

In a possible implementation, the first downlink packet includes a fifth field, and the fifth field indicates a protocol type used for establishing a connection between the terminal device and the network device.

In a possible implementation, the third field further indicates whether the packet is a heartbeat packet.

In a possible implementation, when the terminal device establishes a connection to the network device by using a Bluetooth protocol, the first downlink packet further includes an air interface MAC address of the terminal device.

In a possible implementation, the processing module is further configured to determine the vendor type of the terminal device and the device type of the terminal device based on the notification message;
the processing module is further configured to determine the application server based on the vendor type of the terminal device and the device type of the terminal device; and
the processing module is further configured to generate an association relationship between the terminal device, the network device, and the application server.

According to an eighth aspect, an embodiment of this application provides a communication apparatus, including:
a transceiver module, configured to receive a request message from a terminal device, where the request message includes a first field, the first field indicates identity information of the terminal device, and the request message is used to request the terminal device to establish a communication connection to a network device; and
a processing module, configured to determine an application server based on the request message, so that the application server provides a service for the terminal device, where
the transceiver module is further configured to send a first uplink packet to the application server, where the first uplink packet includes a second field, and the second field indicates the terminal device.

In a possible implementation, the network device performs compliance check on the terminal device based on the first field. The compliance check includes identity check and/or capability check.

In a possible implementation, the identity information of the terminal device includes a vendor type of the terminal device and a device type of the terminal device.

In a possible implementation, the second field is the same as the first field; or the second field is determined based on the first field.

In a possible implementation, the first uplink packet includes a fourth field, the fourth field indicates a packet type, and the packet type includes data, signaling, or another type.

In a possible implementation, the first uplink packet includes a fifth field, and the fifth field indicates a protocol type used for establishing a connection between the terminal device and the network device.

In a possible implementation, when the fourth field indicates that the packet type is signaling, the first uplink packet further includes a third field, the third field indicates a connection status between the terminal device and the network device, and the connection status includes connection succeeded or connection disconnected.

In a possible implementation, the third field further indicates whether the packet is a heartbeat packet.

In a possible implementation, when the terminal device establishes a connection to the network device by using a Bluetooth protocol, the first uplink packet further includes an air interface MAC address of the terminal device.

In a possible implementation, the transceiver module is further configured to receive a first downlink packet from the application server, where the first downlink packet includes the second field, and the second field indicates the terminal device; and
the processing module is further configured to generate a second downlink packet based on the first downlink packet, where the second downlink packet includes the second field, and a destination of the second downlink packet is the terminal device.

In a possible implementation, the first downlink packet includes a fourth field, the fourth field indicates a packet type, and the packet type includes data, signaling, or another type.

In a possible implementation, the first downlink packet includes a fifth field, and the fifth field indicates a protocol type used for establishing a connection between the terminal device and the network device.

In a possible implementation, the third field further indicates whether the packet is a heartbeat packet.

In a possible implementation, when the terminal device establishes a connection to the network device by using a Bluetooth protocol, the first downlink packet further includes an air interface MAC address of the terminal device.

In a possible implementation, the processing module is further configured to determine the vendor type of the terminal device and the device type of the terminal device based on the request message;
the processing module is further configured to determine the application server based on the vendor type of the terminal device and the device type of the terminal device; and
the processing module is further configured to generate an association relationship between the terminal device, the network device, and the application server.

In a possible implementation, the network device includes a plug-in card and a wireless access point AP, where the plug-in card is configured to implement the communication apparatus according to any one of the implementations of the eighth aspect, and the AP is configured to transmit the first downlink packet and/or the first uplink packet.

In a possible implementation, the network device is connected to at least one plug-in card in a pluggable manner. The network device dynamically adds/deletes one or more service capabilities by adding/deleting the at least one plug-in card. The service capability includes one or more of the following: a communication frequency band, a communication protocol, a communication bandwidth, or a communication rate.

According to a ninth aspect, an embodiment of this application provides a communication apparatus. The communication apparatus may implement functions performed by the terminal device, the network device, or the management platform in the method according to the first aspect, the second aspect, the third aspect, or the fourth aspect. The communication apparatus includes a processor, a memory, a receiver connected to the processor, and a transmitter connected to the processor. The memory is configured to store program code, and transmit the program code to the processor. The processor is configured to drive, based on instructions in the program code, the receiver and the transmitter to perform the method according to the first aspect, the second aspect, the third aspect, or the fourth aspect. The receiver and the transmitter are separately connected to the processor, to perform the operations of the terminal device, the network device, the application server, or the management platform in the method according to the foregoing aspects. Specifically, the transmitter may perform a sending operation, and the receiver may perform a receiving operation. Optionally, the receiver and the transmitter each may be a radio frequency circuit, and the radio frequency circuit receives and sends a message through an antenna. Alternatively, the receiver and the transmitter each may be a communication interface, the processor is connected to the communication interface through a bus, and the processor receives or sends a message through the communication interface.

According to a tenth aspect, an embodiment of this application provides a communication apparatus. The communication apparatus may include an entity such as a network device or a chip. Alternatively, the communication apparatus may include an entity such as a terminal device or a chip. The communication apparatus includes a processor and a memory. The memory is configured to store instructions. The processor is configured to execute the instructions in the memory, to enable the communication apparatus to perform the method according to any one of the first aspect, the second aspect, the third aspect, or the fourth aspect.

According to an eleventh aspect, an embodiment of this application provides a computer-readable storage medium storing one or more computer-executable instructions. When the computer-executable instructions are executed by a processor, the processor performs the method according to any one of the possible implementations of the first aspect, the second aspect, the third aspect, or the fourth aspect.

According to a twelfth aspect, an embodiment of this application provides a computer program product (or referred to as a computer program) storing one or more computer-executable instructions. When the computer-executable instructions are executed by a processor, the processor performs the method according to any one of the possible implementations of the first aspect, the second aspect, the third aspect, or the fourth aspect.

According to a thirteenth aspect, this application provides a chip system. The chip system includes a processor, configured to support a computer device in implementing the functions in the foregoing aspects. In a possible design, the chip system further includes a memory. The memory is configured to store program instructions and data that are necessary for the computer device. The chip system may include a chip, or may include a chip and another discrete component.

According to a fourteenth aspect, this application provides a communication system. The communication system includes the communication apparatus according to the fifth aspect, the sixth aspect, the seventh aspect, or the eighth aspect.

### BRIEF DESCRIPTION OF DRAWINGS

FIG. 1a is a schematic diagram of an architecture of an internet of things system according to an embodiment of this application;
FIG. 1b is a schematic diagram of an application scenario according to an embodiment of this application;
FIG. 2 is a schematic diagram of a hardware structure of a communication apparatus according to an embodiment of this application;
FIG. 3a is a schematic diagram of an application scenario according to an embodiment of this application;
FIG. 3b is a schematic diagram of another application scenario according to an embodiment of this application;
FIG. 4 is a schematic diagram of an embodiment of a packet transmission method according to an embodiment of this application;
FIG. 5 is a schematic diagram of a structure of a request message according to an embodiment of this application;
FIG. 6 is a schematic diagram of a structure of a network device according to an embodiment of this application;
FIG. 7 is a schematic diagram of a packet structure according to an embodiment of this application;
FIG. 8 is a schematic diagram of another packet structure according to an embodiment of this application;
FIG. 9 is a schematic diagram of still another packet structure according to an embodiment of this application;
FIG. 10 is a schematic diagram of an embodiment of another packet transmission method according to an embodiment of this application; and
FIG. 11 is a schematic diagram of an embodiment of a communication apparatus according to an embodiment of this application.

### DESCRIPTION OF EMBODIMENTS

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any variant thereof are intended to cover non-exclusive inclusion, so that a process, method, system, product, or device that includes a series of units is not necessarily limited to those units, but may include other units not expressly listed or inherent to such a process, method, product, or device.

The following clearly describes the technical solutions in embodiments of this application with reference to the accompanying drawings in embodiments of this application. In descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

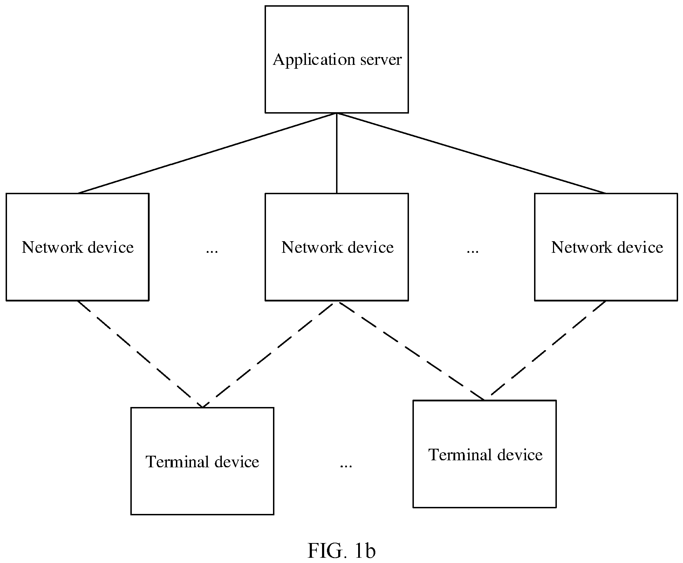

First, some application scenarios of this solution are described. FIG. 1b is a schematic diagram of an application scenario according to an embodiment of this application. A vertical system includes a terminal device, a network device, and an application server. For example, the terminal device may be an electronic shelf label for a shopping mall/supermarket, a mother and baby wristband for medical care, or an asset tag (tag) for a smart campus. The network device functions as a gateway between the terminal device and the application server, and is configured to access the terminal device. A southbound air interface protocol between the network device and the terminal device usually uses a short-range internet of things technology, for example, Zigbee (Zigbee), a radio frequency identification (radio frequency identification, RFID) technology, or a Bluetooth low energy (Bluetooth Low Energy, BLE) technology. The application server is configured to deploy various application systems, and a northbound interaction protocol between the application server and the network device usually uses a user datagram protocol (User Datagram Protocol, UDP), a hypertext transfer protocol (Hypertext Transfer Protocol, HTTP), or the like.

For example, an application system is deployed on an application server. The application system may be a baby anti-theft system of a vendor A. A plurality of network devices (supporting the vendor A) establish communication connections to an application server A on which the baby anti-theft system is deployed, so that the baby anti-theft system covers a large area.

The application system may alternatively be a material management system of a vendor B. A plurality of network devices (supporting the vendor B) establish communication connections to an application server B on which the material management system is deployed, so that the material management system covers a large area.

In actual use, an example in which an application scenario is a hospital is used. The hospital needs to deploy the baby anti-theft system of the vendor A to prevent baby abductions. In addition, the hospital needs also to deploy the material management system of the vendor B to implement medical materials managed using the same system. However, there is a large compatibility problem between the network device supporting the vendor A and the network device supporting the vendor B. For example, a communication spectrum between the network device supporting the vendor A and the terminal device may conflict with a communication spectrum between the network device supporting the vendor B and the terminal device. As a result, communication quality is severely degraded, and normal operation of the baby anti-theft system and the material management system is affected. In addition, a northbound packet between the network device supporting the vendor A and the application server may also conflict with a northbound packet between the network device supporting the vendor B and the application server. That is, radio frequency signals generated by network devices of a plurality of vertical systems in a same area interfere with each other, which affects communication quality.

In this embodiment of this application, the network device receives a request message from the terminal device. The request message includes a first field, and the first field indicates the terminal device to establish a communication connection to the network device. The network device sends a notification message to a management platform. The notification message includes a second field, the second field indicates the terminal device, and the notification message indicates the management platform to establish a communication connection to the application server, so that the application server provides a service for the terminal device. According to the foregoing method, after the network device learns that the terminal device establishes a communication connection to the network device, the network device notifies the management platform to establish a communication connection to the application server, and the application server provides a service for the terminal device. A valid communication connection is established between the terminal device and the application server, so that the application server can provide a service for the terminal device. The second field indicates the terminal device, and the management platform identifies the second field, so that the corresponding application server provides a service for the corresponding terminal device. Fields with specific meanings and the management platform are introduced to effectively resolve a problem of mutual interference between radio frequency signals generated by different network devices in a plurality of vertical devices. Finally, automatic deployment of an internet of things system is implemented and communication quality is improved.

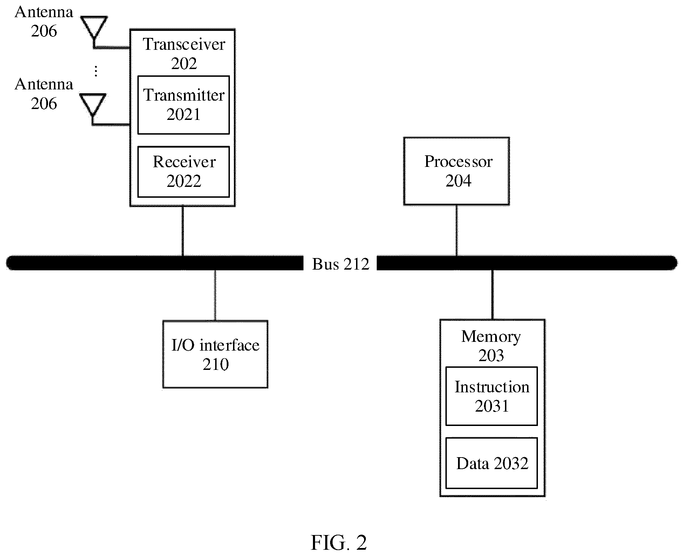

FIG. 2 is a schematic diagram of a hardware structure of a communication apparatus according to an embodiment of this application. The communication apparatus may be a possible implementation of a terminal device, a network device, a management platform, and/or an application server in embodiments of this application. As shown in FIG. 2, the communication apparatus includes at least a processor 204, a memory 203, and a transceiver 202. The memory 203 is further configured to store instructions 2031 and data 2032. Optionally, the communication apparatus may further include antennas 206, an input/output (Input/Output, I/O) interface 210, and a bus 212. The transceiver 202 further includes a transmitter 2021 and a receiver 2022. In addition, the processor 204, the transceiver 202, the memory 203, and the I/O interface 210 are communicatively connected to each other through the bus 212, and the antennas 206 are connected to the transceiver 202.

The processor 204 may be a general-purpose processor, for example, but not limited to, a central processing unit (Central Processing Unit, CPU), or may be a dedicated processor, for example, but not limited to, a digital signal processor (Digital Signal Processor, DSP), an application-specific integrated circuit (Application Specific Integrated Circuit, ASIC), and a field programmable gate array (Field Programmable Gate Array, FPGA). Alternatively, the processor 204 may be a neural network processing unit (neural processing unit, NPU). In addition, the processor 204 may alternatively be a combination of a plurality of processors. In particular, in the technical solution provided in this embodiment of this application, the processor 204 may be configured to perform related steps of a packet transmission method in a subsequent method embodiment. The processor 204 may be a processor that is specially designed to perform the foregoing steps and/or operations, or may be a processor that performs the foregoing steps and/or operations by reading and executing the instructions 2031 stored in the memory 203. The processor 204 may need to use the data 2032 in a process of performing the foregoing steps and/or operations.

The transceiver 202 includes the transmitter 2021 and the receiver 2022. In an optional implementation, the transmitter 2021 is configured to send a signal by using the antenna 206. The receiver 2022 is configured to receive a signal by using at least one of the antennas 206. In particular, in the technical solution provided in this embodiment of this application, the transmitter 2021 may be specifically configured to perform by using at least one of the antennas 206, for example, an operation performed by a receiving module or a sending module in the network device when a packet transmission method in a subsequent method embodiment is applied to the network device.

In this embodiment of this application, the transceiver 202 is configured to support the communication apparatus in performing the foregoing receiving function and sending function. A processor having a processing function is considered as the processor 204. The receiver 2022 may also be referred to as an input port, a receiver circuit, or the like. The transmitter 2021 may be referred to as a transmitter, a transmitter circuit, or the like.

The processor 204 may be configured to execute the instructions stored in the memory 203, to control the transceiver 202 to receive a message and/or send a message, to complete functions of the communication apparatus in the method embodiments of this application. In an implementation, it may be considered that a function of the transceiver 202 is implemented by using a transceiver circuit or a dedicated transceiver chip. In this embodiment of this application, that the transceiver 202 receives a message may be understood as that the transceiver 202 inputs a message, and that the transceiver 202 sends a message may be understood as that the transceiver 202 outputs a message.

The memory 203 may be various types of storage media, for example, a random access memory (Random Access Memory, RAM), a read-only memory (Read-Only Memory, ROM), a non-volatile RAM (Non-Volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 203 is specifically configured to store the instructions 2031 and the data 2032. The processor 204 may perform the steps and/or the operations in the method embodiments of this application by reading and executing the instructions 2031 stored in the memory 203. The data 2032 may need to be used in a process of performing the operations and/or the steps in the method embodiments of this application.

Optionally, the communication apparatus may further include the I/O interface 210. The I/O interface 210 is configured to receive instructions and/or data from a peripheral device, and output instructions and/or data to the peripheral device.

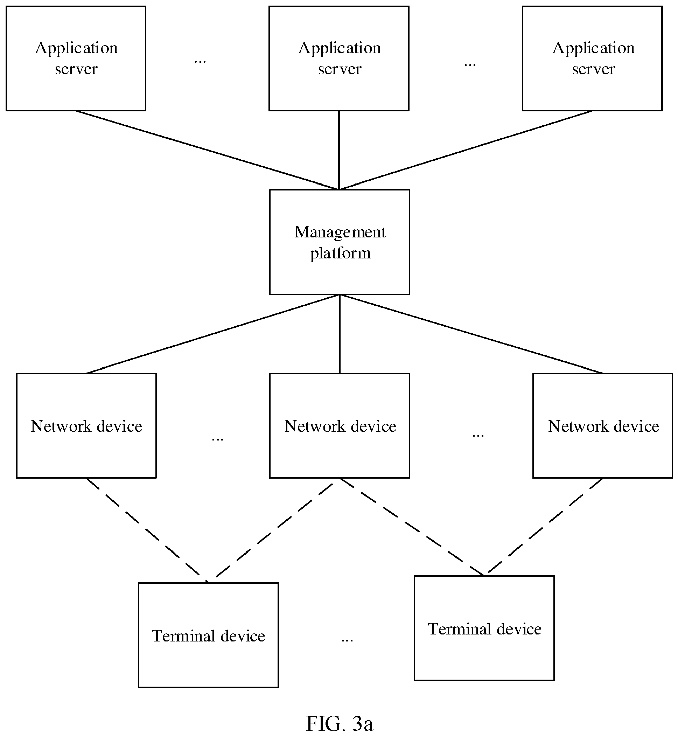

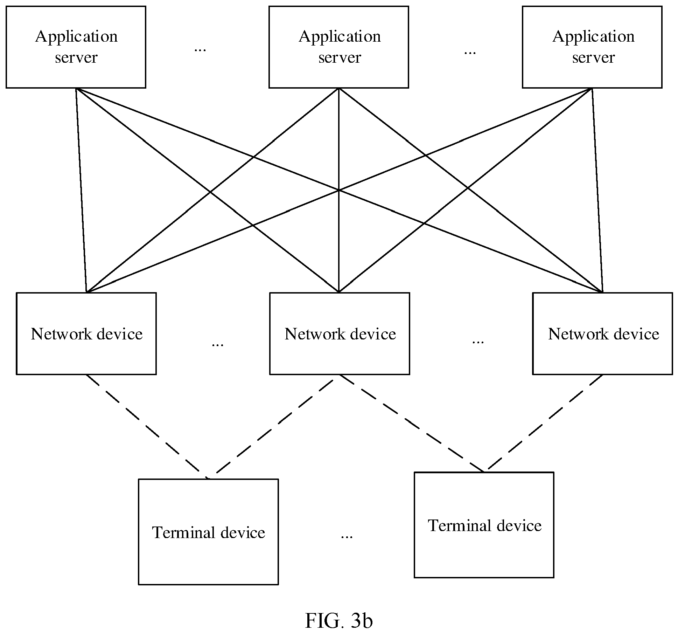

The following describes two implementation solutions provided in embodiments of this application with reference to the accompanying drawings.
(A) A management platform is an intermediate layer between a network device and an application server. The management platform is responsible for determining an application server required by a terminal device. That is, a vertical system (an internet of things system) includes an application server, a management platform, a network device, and a terminal device. The application server establishes a communication connection to the terminal device by using the management platform and the network device. Specifically, FIG. 3a is a schematic diagram of an application scenario according to an embodiment of this application. As shown in FIG. 3a, the management platform is implemented in a form of a server, and the management platform manages information reported by a plurality of network devices. The management platform determines, based on a second field included in the information, the application server required by the terminal device, and further the management platform assists in establishing a communication connection between the application server and the terminal device.
(B) A network device integrates functions of the foregoing management platform. To be specific, a vertical system (an internet of things system) includes an application server, a network device, and a terminal device, and the vertical system does not include an independent management platform. Specifically, FIG. 3b is a schematic diagram of another application scenario according to an embodiment of this application. As shown in FIG. 3b, the management platform is integrated into the network device, and the network device manages information reported by the terminal device. The network device determines, based on the information, the application server required by the terminal device, and further the network device assists in establishing a communication connection between the application server and the terminal device.

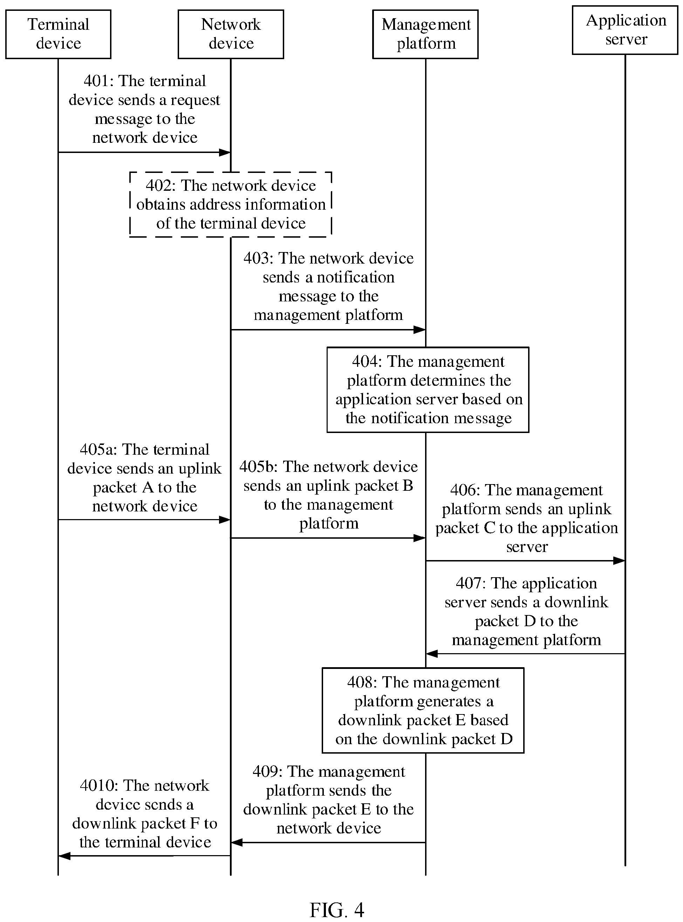

The following describes embodiments corresponding to different implementation solutions with reference to the accompanying drawings. First, an implementation solution (A) is described. Specifically, FIG. 4 is a schematic diagram of an embodiment of a packet transmission method according to an embodiment of this application. The packet transmission method provided in this embodiment of this application includes:
401: A terminal device sends a request message to a network device.

Further, the request message includes a first field, and the first field indicates identity information of the terminal device. The request message is used to request the terminal device to establish a communication connection to the network device.

Optionally, the network device performs compliance check on the terminal device based on the first field. The compliance check includes but is not limited to identity check of the terminal device or capability check of the terminal device.

Specifically, the identity check may be admission check of the terminal device. A vendor type of the terminal device is determined based on the first field, and the network device allows access of a device of a specific vendor. Alternatively, a device type of the terminal device is determined based on the first field, and the network device allows access of a terminal device of a specific device type. Alternatively, a device type of the terminal device and a vendor type of the terminal device are determined based on the first field, and the network device allows access of a terminal device of a specific vendor and a specific device type. For example, a current network device allows access of only a smart wristband of a vendor A. When a first field of a terminal device A indicates that the terminal device is a smart wristband of the vendor A, the network device completes compliance check on the terminal device A based on the first field, and allows access of the terminal device A.

The capability check includes but is not limited to: checking whether the terminal device supports an encryption capability, or checking a type of an encryption algorithm used by the terminal device. For example, the network device allows access of only a terminal device having an encryption capability. The network device determines the device type and the vendor type of the terminal device based on the first field, and further determines whether the terminal device supports an encryption capability. When the terminal device supports the encryption capability, the network device allows access of the terminal device. The network device allows access of terminal devices using encryption algorithms A and B. The network device determines the device type and the vendor type of the terminal device based on the first field, and further determines the encryption algorithm supported by the terminal device. When the terminal device supports only an encryption algorithm C, the network device rejects access of the terminal device.

Optionally, the first field may further include a dedicated field, and the dedicated field indicates whether the terminal device supports an encryption capability and/or a type of a used encryption algorithm.

In a possible implementation, the first field includes a first subfield and a second subfield, the first subfield indicates a vendor type of the terminal device, and the second subfield indicates a device type of the terminal. For example, the first field is shown in Table 1.

**Table 1**

| First field | First subfield | Vendor type | Second subfield | Device type |
|---|---|---|---|---|
| 0101 | 01 | A | 01 | Wristband |
| 0203 | 02 | B | 03 | RFID tag |
| 0303 | 03 | C | 05 | RFID tag |
| 0304 | 03 | C | 04 | Doctor workstation |

Specifically, for example, the first field is "0304", and the first field indicates that the terminal device is a doctor workstation of a vendor C. Main functions of the doctor workstation are to help outpatient doctors write and maintain routine prescriptions or medical records in a standard and highly efficient manner, and query drug information. For example, the first field is "0101", and the first field indicates that the terminal device is a wristband of a vendor A. Further, the first field may be further shown in Table 2.

**Table 2**

| First field | First subfield | Vendor type | Second subfield | Device type |
|---|---|---|---|---|
| 01011 | 01 | A | 011 | Healthcare personnel wristband |
| 01012 | 01 | A | 012 | Baby wristband |
| 01013 | 01 | A | 013 | Mother wristband |
| 01020 | 01 | A | 020 | Smart bed card |
| 02020 | 02 | B | 020 | Smart bed card |

That is, the first field includes the first subfield (the vendor type of the terminal device) and the second subfield (the device type of the terminal device), and the vendor type and the device type of the terminal device are determined by using a joint indication of the first subfield and the second subfield. The first field may clearly indicate different types of devices of a same vendor, or the first field may indicate different types of devices of different vendors, or the first field may indicate a same type of devices of different vendors. This is not limited herein.

In another possible implementation, the first field indicates a vendor type of the terminal device and a device type of the terminal device. For example, the first field is "11111", and the first field indicates that the terminal device is a baby wristband of a vendor D.

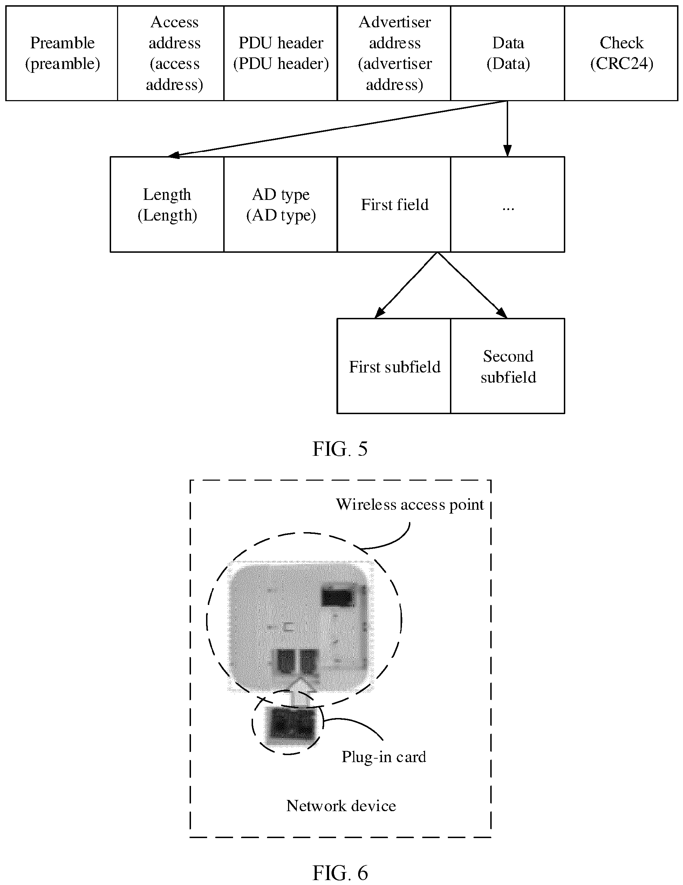

For example, Bluetooth low energy BLE communication is used between the terminal device and the network device. The request message may be an "ADV_IND" packet sent by the terminal device after the terminal device is powered on, and the request message may also be referred to as a Bluetooth broadcast frame. For ease of understanding, FIG. 5 is a schematic diagram of a structure of a request message according to an embodiment of this application. The request message includes one or more of the following fields: a preamble (preamble), an access address (access address), a protocol data unit header (Protocol Data Unit header, PDU header), an advertiser address (advertiser address), data (Data), and check. The check may use a CRC24 check algorithm. The data field includes a first field and other fields. The other fields include, for example, a length (Length) and an AD type (AD Type). The first field includes a first subfield and a second subfield.

402: The network device obtains address information of the terminal device.

Further, after the network device receives the request message of the terminal device, the network device may further obtain the address information of the terminal device. The address information of the terminal device includes but is not limited to: Bluetooth address information of the terminal device, a medium access control address (media access control address, MAC Address) of the terminal device, an internet protocol address (Internet Protocol Address, IP Address) of the terminal device, or an electronic product code (Electronic Product Code, EPC) of the terminal device.

The network device may obtain the address information of the terminal device by using the request message in step 401. Alternatively, the network device may obtain the address information of the terminal device from a registration message of the terminal device. The registration message is terminal device-related information stored by the network device when the terminal device accesses the network device for the first time. The network device may further actively query the terminal device, to obtain the address information of the terminal device. This is not limited herein.

It should be noted that step 402 is an optional step. When step 402 is not performed, step 403 is performed after step 401.

403: The network device sends a notification message to the management platform.

After step 401, the network device establishes a communication connection to the terminal device. A protocol type used for the communication connection includes but is not limited to: radio frequency identification RFID, Zigbee (Zigbee), Bluetooth, Bluetooth low energy BLE, an internet of things IoT, wireless fidelity (Wireless Fidelity, Wi-Fi), or a cellular network (for example, a 4G, 5G, or future 6G system). After the network device successfully establishes the communication connection to the terminal device, the network device sends the notification message to the management platform, to indicate the management platform to establish the communication connection to the application server. The application server provides a service for the terminal device.

An implementation of the network device is as follows: The network device supports a plurality of protocol types for data exchange with the terminal device. For example, the network device simultaneously supports all the foregoing protocol types. The network device further supports a communication connection to the management platform. For example, the network device supports establishment of a communication connection to the management platform by using an internet or a local area network.

Further, the network device may further support an extension function of a hardware module, and the hardware module may be referred to as a plug-in card. For ease of understanding, FIG. 6 is a schematic diagram of a structure of a network device according to an embodiment of this application. The network device includes a wireless access point (access point, AP) and a plug-in card, the wireless access point includes one or more interfaces for establishing a communication connection to the plug-in card, and the wireless access point establishes a communication connection to one or more plug-in cards through the interface. Different plug-in cards may implement different functions. The following provides an example for description.

For example, a plug-in card A, a plug-in card B, and a plug-in card C are all communication modules that support a Bluetooth protocol. The plug-in card A supports a terminal device of a vendor A, the plug-in card B supports a terminal device of a vendor B, and the plug-in card C supports a terminal device of a vendor C.

In still another example, a plug-in card A, a plug-in card B, and a plug-in card C are all communication modules that support a vendor A, a vendor B, and a vendor C. The plug-in card A is a communication module that supports a Bluetooth protocol, the plug-in card B is a communication module that supports a Zigbee (Zigbee) protocol, and the plug-in card C is a communication module that supports a radio frequency identification RFID protocol.

In still another example, a plug-in card A, a plug-in card B, and a plug-in card C are all communication modules that support a Bluetooth protocol of a vendor A. The plug-in card A is configured to establish a communication connection to a baby wristband of the vendor A, the plug-in card B is configured to establish a communication connection to a doctor workstation of the vendor A, and the plug-in card C is configured to establish a communication connection to a smart bed card of the vendor A.

The purpose of the management platform includes but is not limited to: data distribution between the network device and an application server; ancillary management between the network device and the application server; and management of the terminal device, the network device, and the application server, for example, alarm, data display, message push, or security management. The management platform may be further configured to manage plug-in cards in each network device. For example, for a relationship between network devices managed by the management platform and plug-in cards in the network device, refer to Table 3.

**Table 3**

| Network device | Plug-in card | Supported vendor type | Supported device type | Supported protocol type |
|---|---|---|---|---|
| 01 | 01/02/03 | A | RFID tag/Doctor workstation/Healthcare personnel wristband | Bluetooth |
| 02 | 05/06/07 | A/B/C | Doctor workstation | Bluetooth/Zigbee/ RFID |
| 03 | 08/09 | A/B | Baby wristband/Mother wristband | Bluetooth |

In a possible implementation, after the terminal device establishes a communication connection to the network device, the network device may send the notification message to the management platform. The notification message indicates the management platform to establish a communication connection to the application server.

In another possible implementation, after receiving the request message sent by the terminal device (step 401), the network device may send a communication message to the management platform. The communication message indicates the management platform to establish a communication connection to the application server. After the network device sends the communication message to the management platform, the network device establishes a communication connection to the terminal device.

The communication message may further indicate the management platform to generate an association relationship between the terminal device, the network device, and the application server, so that the management platform can conveniently determine a destination of a packet exchanged between the terminal device and the application server. Alternatively, the association relationship may be an association relationship between the terminal device, the network device, the vendor type of the terminal device, the device type of the terminal device, and the application server. For example, for the association relationship, refer to Table 4.

**Table 4**

| Terminal device (identifier and address information) | Network device (identifier and address information) | Vendor type of the terminal device | Device type of the terminal device | Application server (address information) |
|---|---|---|---|---|
| (01, AAA) | (01, aaa) | A | Doctor workstation | Application server A |
| (02, BBB) | (01, aaa) | B | Baby wristband | Application server B |
| (03, CCC) | (02, bbb) | A | Mother wristband | Application server A |

Optionally, for a procedure of establishing the communication connection between the network device and the terminal device, refer to a procedure agreed in an existing protocol. Details are not described herein again.

404: The management platform determines the application server based on the notification message.

In a possible implementation, an association relationship between the vendor type of the terminal device, the device type of the terminal device, and the application server is preconfigured in the management platform. After determining the vendor type and the device type of the terminal device based on the notification message from the network device, the management platform determines, from the preconfigured association relationship, the application server corresponding to the terminal device.

In another possible implementation, the notification message carries the vendor type of the terminal device, the device type of the terminal device, and related identification information of the application server. The related identification information of the application server includes but is not limited to the address information of the application server, for example, an IP address of the application server. The management platform determines the corresponding application server based on the notification message.

405a: The terminal device sends an uplink packet A to the network device.

Further, the terminal device sends the uplink packet A to the network device. The uplink packet A may be a data packet or a signaling packet. Specifically, a protocol type used by the uplink packet A includes but is not limited to radio frequency identification RFID, Zigbee (Zigbee), Bluetooth, Bluetooth low energy BLE, or an internet of things IoT. A destination of the uplink packet A is the network device. Specifically, the uplink packet A includes address information of the network device, and the address information of the network device includes but is not limited to an IP address of the network device or a MAC address of the network device.

The uplink packet A in this embodiment may be the foregoing third uplink packet.

405b: The network device sends an uplink packet B to the management platform.

Further, after receiving the uplink packet A from the terminal device, the network device generates the uplink packet B based on the uplink packet A. A destination of the uplink packet B is the management platform. A valid payload of the uplink packet B is the same as a valid payload of the uplink packet A. Specifically, the uplink packet B includes address information of the management platform, and the address information of the management platform includes but is not limited to an IP address of the management platform or a MAC address of the management platform.

The uplink packet B in this embodiment may be the foregoing second uplink packet.

406: The management platform sends an uplink packet C to the application server.

Further, after the management platform receives the uplink packet B from the network device (the uplink packet B is generated based on the uplink packet A, and the uplink packet A is sent by the terminal device to the network device), the management platform generates the uplink packet C based on the uplink packet B. The management platform sends the uplink packet C to the application server determined in step 404. The following describes the uplink packet C in detail.

The uplink packet C includes a second field, and the second field indicates the terminal device.

In a possible implementation, the second field is the same as the first field. In other words, the second field further indicates the identity information of the terminal device. The second field includes a first subfield and a second subfield, and the second field indicates a vendor type of the terminal device and a device type of the terminal device. The second field is generated based on the first field.

In another possible implementation, the second field is another field indicating the first field. The management platform and the application server separately maintain an association relationship table between the second field and the first field. The application server and the management platform may determine the corresponding first field based on the second field, and further determines the vendor type and the device type that are of the terminal device and that are indicated by the first field.

The uplink packet C may further include one or more of the following fields:

The uplink packet C includes a fourth field, the fourth field indicates a packet type, and the packet type includes data, signaling, or another type. The another type may be reserved (reserved).

The uplink packet C includes a fifth field, and the fifth field indicates a protocol type used for establishing a connection between the terminal device and the network device. When the fifth field indicates that the protocol type used for establishing a connection between the terminal device and the network device is Bluetooth (or Bluetooth low energy), the uplink packet C may further include an air interface MAC address of the terminal device. The air interface MAC address refers to a group of 48-bit (6-byte) data, and is a unique identifier of a Bluetooth device (that is, the terminal device).

When the fourth field indicates that the packet type is signaling, the uplink packet C further includes a third field, the third field indicates a connection status between the terminal device and the network device, and the connection status includes connection succeeded or connection disconnected. Optionally, the third field further indicates whether the packet is a heartbeat packet.

The uplink packet C further includes a first timestamp, and the first timestamp indicates a time at which the management platform sends the uplink packet C.

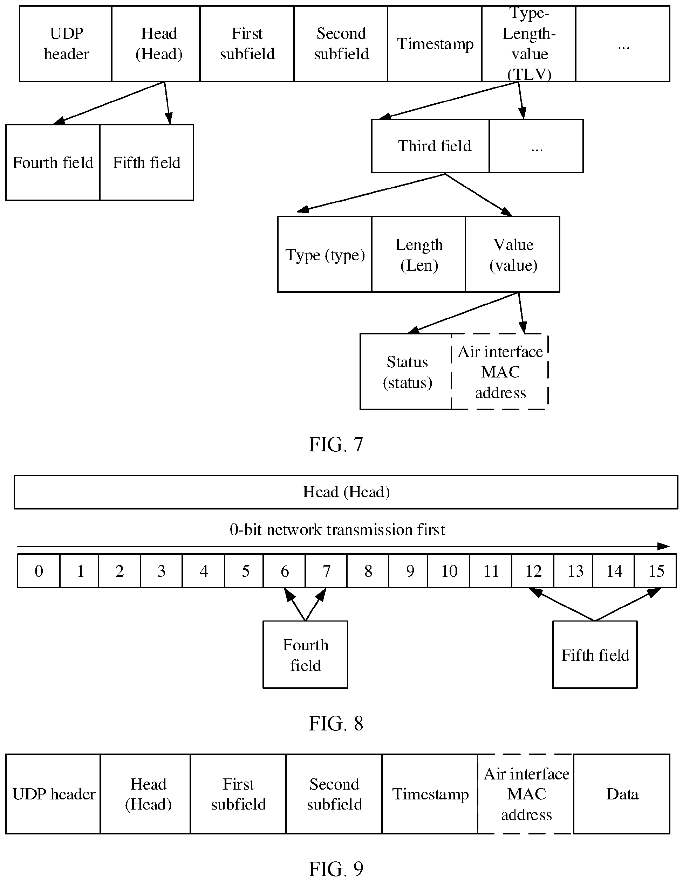

For example, FIG. 7 is a schematic diagram of a packet structure according to an embodiment of this application. The uplink packet C shown in FIG. 7 is a signaling packet. The uplink packet C includes a UDP header, a head (head), a first subfield, a second subfield, a timestamp, a type-length-value (type-length-value, TLV), and another field. The head (head) field includes the fourth field and the fifth field, and the tag length value includes the third field.

When the uplink packet C uses another protocol (for example, the HTTP protocol), the UDP header in the uplink packet C may alternatively be replaced with another header. This is not limited herein.

For example, for a specific value of the fourth field and a packet type indicated by the fourth field, refer to Table 5.

**Table 5**

| Fourth field (specific value) | Packet type indicated by the fourth field |
|---|---|
| 1 | Signaling packet |
| 2 | Data packet |
| 3 | Reserved |

For example, for a specific value of the fifth field and a protocol type that is used for the packet and that is indicated by the fifth field, refer to Table 6.

**Table 6**

| Fifth field (specific value) | Packet type indicated by the fifth field |
|---|---|
| 1 | Bluetooth |
| 2 | Zigbee protocol |
| 3 | RFID protocol |

Specifically, a value of the fifth field is 1, it indicates that the Bluetooth protocol is used for communication between the terminal device and the network device. A value of the fifth field is 2, it indicates that the Zigbee protocol is used for communication between the terminal device and the network device. A value of the fifth field is 3, it indicates that the RFID protocol is used for communication between the terminal device and the network device.

For example, for a schematic diagram of the head (head) field, refer to FIG. 8. FIG. 8 is a schematic diagram of another packet structure according to an embodiment of this application. Bits 6 and 7 in the head field are the fourth field, and bits 12 to 15 in the head field are the fifth field.

For example, for a specific value of the third field and a connection status that is between the terminal device and the network device and that is indicated by the third field, refer to Table 7.

**Table 7**

| Third field | | Meaning of the third field |
|---|---|---|
| "Type (Type)" field | "Value (value)" field | |
| 1 | - | This packet is a heartbeat packet |
| 2 | 1 | The connection status between the terminal device and the network device is connection succeeded |
| 2 | 2 | The connection status between the terminal device and the network device is connection disconnected |

Specifically, the "type (Type)" field and the "value (value)" field in the third field jointly indicate the connection status between the terminal device and the network device. For example, when a value of the "type (Type)" field is 1, it indicates that the uplink packet C is a heartbeat packet. When a value of the "type (Type)" field is 2, the "type (Type)" field and the "value (value)" field jointly indicate the connection status between the terminal device and the network device. When a value of a "status (status)" field in the "value (value)" field is 1, it indicates that the connection status between the terminal device and the network device is connection succeeded. When the "status (status)" field is 2, it indicates that the connection status between the terminal device and the network device is connection disconnected.

The uplink packet C may further include address information of the terminal device, and the address information of the terminal device may also be referred to as a tag address. The third field may further include an air interface MAC address, that is, the "value (value)" field in the third field includes the air interface MAC address.

Optionally, when the fifth field indicates that the Bluetooth protocol (or Bluetooth low energy) is used for communication between the terminal device and the network device, the third field may further include an air interface MAC address, that is, the "value (value)" field in the third field includes the air interface MAC address.

A timestamp field in the uplink packet C is referred to as a first timestamp, and the first timestamp indicates a time at which the management platform sends the uplink packet C to the application server. The first timestamp may be a moment at which counting starts from midnight, and a unit of the first timestamp may be millisecond.

It should be noted that, when the uplink packet C is a signaling packet, the uplink packet C may include a plurality of tag length value fields.

When the uplink packet C is a data packet, that is, a value of the fourth field is 2, it indicates that the uplink packet C is a data packet. For a schematic diagram of the uplink packet C, refer to FIG. 9. FIG. 9 is a schematic diagram of still another packet structure according to an embodiment of this application. A packet structure of the data packet is similar to the packet structure of the signaling packet shown in FIG. 7, and a difference lies in that the uplink packet C includes a data field.

Optionally, the uplink packet C may further include address information of the network device, and the address information of the network device includes but is not limited to an IP address of the network device or a MAC address of the network device.

The uplink packet C in this embodiment may be the foregoing first uplink packet.

407: The application server sends a downlink packet D to the management platform.

In this embodiment, after the application server receives the uplink packet C from the management platform, the application server performs a related operation based on the uplink packet C. The application server sends the downlink packet D to the management platform. A specific structure of the downlink packet D is similar to that of the uplink packet C in step 406, and details are as follows:
The downlink packet D includes a second field, and the second field indicates the terminal device.

In a possible implementation, the second field is the same as the first field. In other words, the second field further indicates the identity information of the terminal device. The second field includes a first subfield and a second subfield, and the second field indicates a vendor type of the terminal device and a device type of the terminal device.

In another possible implementation, the second field is another field indicating the first field. The management platform and the application server separately maintain an association relationship table between the second field and the first field. The application server and the management platform may determine the corresponding first field based on the second field, and further determines the vendor type and the device type that are of the terminal device and that are indicated by the first field.

The downlink packet D may further include one or more of the following fields:
The downlink packet D includes a fourth field, the fourth field indicates a packet type, and the packet type includes data, signaling, or another type. The another type may be reserved (reserved).

The downlink packet D includes a fifth field, and the fifth field indicates a protocol type used for establishing a connection between the terminal device and the network device. When the fifth field indicates that the protocol type used for establishing a connection between the terminal device and the network device is Bluetooth (or Bluetooth low energy), the downlink packet D further includes an air interface MAC address of the terminal device. The air interface MAC address refers to a group of 48-bit (6-byte) data, and is a unique identifier of a Bluetooth device (that is, the terminal device).

The downlink packet D further includes a second timestamp, and the second timestamp indicates a time at which the application server sends the downlink packet D.

For example, FIG. 7 may further indicate that the downlink packet D is a signaling packet. The downlink packet D includes a UDP header, a head (head), a first subfield, a second subfield, a timestamp, a type-length-value (type-length-value, TLV), and another field. The head (head) field includes the fourth field and the fifth field, and the tag length value includes the third field.

The fourth field is 1, it indicates that the downlink packet D is a signaling packet. If a value of the fifth field is 1, it indicates that the protocol type used for the downlink packet D is Bluetooth, that is, the Bluetooth protocol is used for communication between the terminal device and the network device. If a value of the fifth field is 2, it indicates that the protocol type used for the downlink packet D is Zigbee, that is, the Zigbee protocol is used for communication between the terminal device and the network device. If a value of the fifth field is 3, it indicates that the protocol type used for the downlink packet D is RFID, that is, the RFID protocol is used for communication between the terminal device and the network device.

For example, for a schematic diagram of the head (head) field, refer to FIG. 8. Bits 6 and 7 in the head field are the fourth field, and bits 12 to 15 in the head field are the fifth field.

The downlink packet D may further include address information of the terminal device, and the address information of the terminal device may also be referred to as a tag address. When the fifth field indicates that the Bluetooth protocol (or Bluetooth low energy) is used for communication between the terminal device and the network device, the third field may further include an air interface MAC address, that is, the "value (value)" field in the third field includes the air interface MAC address.

A timestamp field in the downlink packet D is referred to as a second timestamp, and the second timestamp indicates a time at which the application server sends the downlink packet D to the management platform. The second timestamp may be a moment at which counting starts from midnight, and a unit of the second timestamp may be millisecond.

It should be noted that, when the downlink packet D is a signaling packet, the downlink packet D may include a plurality of tag length value fields.

When the downlink packet D is a data packet, that is, a value of the fourth field is 2, it indicates that the downlink packet D is a data packet. For a schematic diagram of the downlink packet D, refer to FIG. 9. FIG. 9 is a schematic diagram of a packet structure according to an embodiment of this application. A packet structure of the data packet is similar to the packet structure of the signaling packet shown in FIG. 7, and a difference lies in that the downlink packet D includes a data field.

Optionally, the downlink packet D may further include address information of the network device, and the address information of the network device includes but is not limited to an IP address of the network device or a MAC address of the network device.

In a possible implementation, a head (head) field of the downlink packet D is consistent with a head (head) field of the uplink packet C.

The downlink packet D in this embodiment may be the foregoing first downlink packet.

408: The management platform generates a downlink packet E based on the downlink packet D.

Further, after receiving the downlink packet D, the management platform generates the downlink packet E based on the downlink packet D. A destination of the downlink packet E is the network device.

In a possible implementation, the management platform determines the corresponding terminal device based on the second field included in the downlink packet D. Further, the network device that provides a communication service for the terminal device is determined.

In still another possible implementation, the management platform determines the terminal device based on address information of the terminal device or the network device included in the downlink packet D, and further determines the network device that provides a communication service for the terminal device.

The management platform generates the downlink packet E based on the downlink packet D, and the downlink packet E includes the second field. A valid payload in the downlink packet E includes a valid payload in the downlink packet D. Optionally, a packet structure of the downlink packet E is similar to a packet structure of the downlink packet D. For example, the downlink packet E includes the fourth field. Details are not described herein again. A destination of the downlink packet E is the network device. Specifically, the downlink packet E includes address information of the network device, and the address information of the network device includes but is not limited to an IP address of the network device or a MAC address of the network device.

The downlink packet E in this embodiment may be the foregoing second downlink packet.

409: The management platform sends the downlink packet E to the network device.

4010: The network device sends a downlink packet F to the terminal device.

Further, after receiving the downlink packet E from the management platform, the network device generates the downlink packet F based on the downlink packet E. A destination of the downlink packet F is the terminal device. Specifically, the downlink packet F includes address information of the terminal device, and the address information of the terminal device includes but is not limited to an IP address of the terminal device or a MAC address of the terminal device.

A protocol type used by the downlink packet F includes but is not limited to radio frequency identification RFID, Zigbee (Zigbee), Bluetooth, Bluetooth low energy BLE, or an internet of things IoT.

Further, the network device determines the vendor type and the device type of the terminal device based on the second field (or the second field and the fifth field) included in the downlink packet E, and further determines the communication protocol used between the network device and the terminal device. The network device generates, based on the downlink packet E, the downlink packet F sent to the terminal device, and the downlink packet F uses the communication protocol used between the network device and the terminal device. For example, if the network device determines that the communication protocol used between the network device and the terminal device is the Zigbee protocol, the network device uses the Zigbee protocol based on the downlink packet F generated based on the downlink packet E. A valid payload of the downlink packet F is the same as a valid payload of the downlink packet F.

In this embodiment of this application, the network device receives a request message from the terminal device. The request message includes a first field, and the first field indicates the terminal device to establish a communication connection to the network device. The network device sends a notification message to a management platform. The notification message includes a second field, the second field indicates the terminal device, and the notification message indicates the management platform to establish a communication connection to the application server, so that the application server provides a service for the terminal device. According to the foregoing method, after the network device learns that the terminal device establishes a communication connection to the network device, the network device notifies the management platform to establish a communication connection to the application server, and the application server provides a service for the terminal device. A valid communication connection is established between the terminal device and the application server, so that the application server can provide a service for the terminal device. The second field indicates the terminal device, and the management platform identifies the second field, so that the corresponding application server provides a service for the corresponding terminal device. Fields with specific meanings and the management platform are introduced to effectively resolve a problem of access conflict between devices from a plurality of vendors and implement interconnection between the devices from the plurality of vendors. In addition, a problem of mutual interference between radio frequency signals generated by different network devices in a plurality of vertical devices can be resolved. Finally, automatic deployment of an internet of things system is implemented and communication quality is improved.

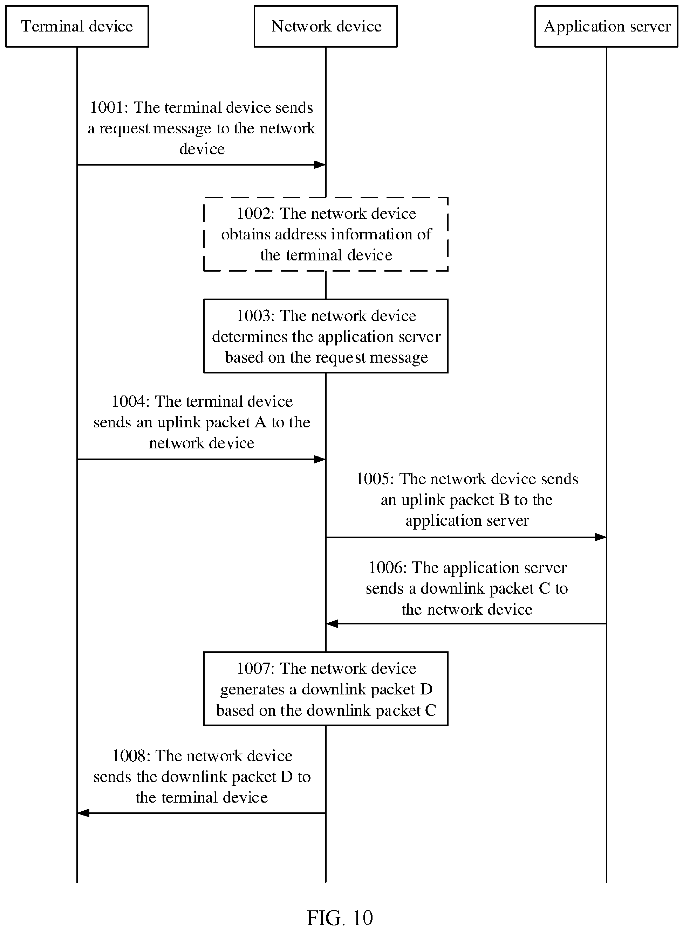

Another possible implementation of this embodiment of this application is described below with reference to the foregoing embodiments. FIG. 10 is a schematic diagram of an embodiment of another packet transmission method according to an embodiment of this application. The embodiment shown in FIG. 10 may be applied to the application scenario shown in FIG. 3b. The packet transmission method provided in this embodiment of this application includes:
1001: A terminal device sends a request message to a network device.

Step 1001 is consistent with step 401, and details are not described herein again.

1002: The network device obtains address information of the terminal device.

Step 1002 is consistent with step 402, and details are not described herein again.

It should be noted that step 1002 is an optional step.

It should be noted that, for related descriptions of the network device, refer to the foregoing step 403. Details are not described herein again.

1003: The network device determines an application server based on the request message.

In a possible implementation, an association relationship between a vendor type of the terminal device, a device type of the terminal device, and the application server is preconfigured in the network device. After determining the vendor type and the device type of the terminal device based on the request message from the terminal device, the network device determines, from the preconfigured association relationship, the application server corresponding to the terminal device.

In another possible implementation, the request message carries the vendor type of the terminal device, the device type of the terminal device, and related identification information of the application server. The related identification information of the application server includes but is not limited to the address information of the application server, for example, an IP address of the application server. The network device determines the corresponding application server based on the request message.

1004: The terminal device sends an uplink packet A to the network device.

Further, the terminal device sends the uplink packet A to the network device. The uplink packet A may be a data packet or a signaling packet. Specifically, a protocol type used by the uplink packet A includes but is not limited to radio frequency identification RFID, Zigbee (Zigbee), Bluetooth, Bluetooth low energy BLE, or an internet of things IoT. A destination of the uplink packet A is the network device. Specifically, the uplink packet A includes address information of the network device, and the address information of the network device includes but is not limited to an IP address of the network device or a MAC address of the network device.

The uplink packet A in this embodiment may be the foregoing second uplink packet.

1005: The network device sends an uplink packet B to the application server.

Further, after the network device receives the uplink packet A from the terminal device, the network device generates the uplink packet B based on the uplink packet A. The network device sends the uplink packet B to the application server determined in step 1003. For detailed description of the uplink packet B, refer to the foregoing step 406. Details are not described herein again.

The uplink packet B in this embodiment may be the foregoing first uplink packet.

1006: The application server sends a downlink packet C to the network device.

In this embodiment, after the application server receives the uplink packet B from the network device, the application server performs a related operation based on the uplink packet B. The application server sends the downlink packet C to the network device. For detailed description of the downlink packet C, refer to step 407. Details are not described herein again.

In a possible implementation, the application server determines the corresponding terminal device based on a second field included in the uplink packet B. Further, the network device that provides a communication service for the terminal device is determined.

In still another possible implementation, the application server determines the terminal device based on address information of the terminal device or the network device included in the uplink packet B, and further determines the network device that provides a communication service for the terminal device.

The downlink packet C in this embodiment may be the foregoing first downlink packet.

1007: The network device generates a downlink packet D based on the downlink packet C.

In step 1007, after receiving the downlink packet C from the application server, the network device generates the downlink packet D based on the downlink packet C. A valid payload of the downlink packet D is the same as a valid payload of the downlink packet C. A destination of the downlink packet D is the terminal device. Specifically, the downlink packet D includes address information of the terminal device, and the address information of the terminal device includes but is not limited to an IP address of the terminal device or a MAC address of the terminal device.

Specifically, a protocol type used by the downlink packet D includes but is not limited to radio frequency identification RFID, Zigbee (Zigbee), Bluetooth, Bluetooth low energy BLE, or an internet of things IoT.

The downlink packet D in this embodiment may be the foregoing second downlink packet.

1008: The network device sends the downlink packet D to the terminal device.

Steps 1007 and 1008 are similar to the foregoing step 4010, and details are not described herein again.

In this embodiment of this application, the network device receives the request message from the terminal device, where the request message includes the first field, and the first field indicates the terminal device to establish a communication connection to the network device; and the network device sends the uplink packet B to the application server, where the uplink packet B includes the second field, and the second field indicates the terminal device, so that the application server provides a service for the terminal device. According to the foregoing method, after the network device learns that the terminal device establishes a communication connection to the network device, the network device establishes a communication connection to the application server, and the application server provides a service for the terminal device. A valid communication connection is established between the terminal device and the application server, so that the application server can provide a service for the terminal device. The first field indicates the identity information of the terminal device, and the network device identifies the first field, so that the corresponding application server provides a service for the corresponding terminal device. Fields with specific meanings are introduced to effectively resolve a problem of access conflict between devices from a plurality of vendors and implement interconnection between the devices from the plurality of vendors. In addition, a problem of mutual interference between radio frequency signals generated by different network devices in a plurality of vertical devices can be resolved. Finally, automatic deployment of an internet of things system is implemented and communication quality is improved.

The foregoing mainly describes the solutions provided in embodiments of this application from the perspective of the methods. It may be understood that, to implement the foregoing functions, a communication apparatus includes corresponding hardware structures and/or software modules for performing the functions. A person of ordinary skill in the art should easily be aware that, in combination with the examples described in embodiments disclosed in this specification, modules, algorithms and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, the communication apparatus may be divided into functional modules based on the foregoing method examples. For example, functional modules corresponding to functions may be obtained through division, or two or more functions may be integrated into one transceiver module. The integrated module may be implemented in a form of hardware, or may be implemented in a form of a software functional module. It should be noted that, in embodiments of this application, module division is an example, and is merely a logical function division. In actual implementation, another division manner may be used.

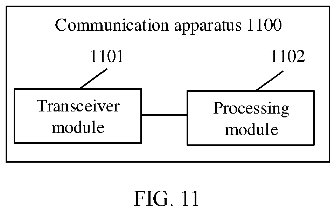

The following describes in detail a communication apparatus in this application. FIG. 11 is a schematic diagram of an embodiment of the communication apparatus according to an embodiment of this application. The communication apparatus may be deployed in a network device or a server, and the communication apparatus 1100 includes:
a transceiver module 1101, configured to receive a request message from a terminal device, where the request message includes a first field, the first field indicates identity information of the terminal device, and the request message is used to request the terminal device to establish a communication connection to a network device, where
the transceiver module 1101 is further configured to send a notification message to a management platform, where the notification message includes a second field, the second field indicates the terminal device, and the notification message indicates the management platform to establish a communication connection to an application server, so that the application server provides a service for the terminal device.

In a possible implementation, the transceiver module 1101 is further configured to perform the foregoing steps 401 and 405a.

In a possible implementation, the transceiver module 1101 is further configured to perform the foregoing steps 403, 405b, and 4010.

In a possible implementation, the processing module 1102 is further configured to perform the foregoing step 402.

In a possible implementation, the transceiver module 1101 is further configured to perform the foregoing steps 406 and 409.

In a possible implementation, the processing module 1102 is further configured to perform the foregoing steps 404 and 408.

In a possible implementation, the transceiver module 1101 is further configured to perform the foregoing step 407.

In a possible implementation, the transceiver module 1101 is further configured to perform the foregoing steps 1001 and 1004.

In a possible implementation, the transceiver module 1101 is further configured to perform the foregoing steps 1005 and 1008.

In a possible implementation, the processing module 1102 is further configured to perform the foregoing steps 1002, 1003, and 1007.

In a possible implementation, the transceiver module 1101 is further configured to perform the foregoing step 1006.

In a possible implementation, the network device is connected to at least one plug-in card in a pluggable manner. The network device dynamically adds/deletes one or more service capabilities by adding/deleting the at least one plug-in card. The service capability includes one or more of the following: a communication frequency band, a communication protocol, a communication bandwidth, or a communication rate.

The communication apparatus in the foregoing embodiments may be a network device, or may be a chip used in the network device, or another combined part, component, or the like that can implement a function of the network device. When the communication apparatus is a network device, the transceiver module may be a transceiver. The transceiver may include an antenna, a radio frequency circuit, and the like. The processing module may be a processor, for example, a baseband chip. When the communication apparatus is a component having a function of the foregoing network device, the transceiver module may be a radio frequency unit, and the processing module may be a processor. When the communication apparatus is a chip system, the transceiver module may be an input port of the chip system, the transceiver module may be an output interface of the chip system, and the processing module may be a processor of the chip system, for example, a central processing unit (central processing unit, CPU).

The communication apparatus in the foregoing embodiment may be a terminal device, or may be a chip used in the terminal device, or another combined component, component, or the like that can implement a function of the terminal device. When the communication apparatus is a terminal device, the transceiver module may be a transceiver. The transceiver may include an antenna, a radio frequency circuit, and the like. The processing module may be a processor, for example, a baseband chip. When the communication apparatus is a component that has the functions of the terminal device, the transceiver module may be a radio frequency unit, and the processing module may be a processor. When the communication apparatus is a chip system, the transceiver module may be an input port of the chip system, the transceiver module may be an output interface of the chip system, and the processing module may be a processor of the chip system, for example, a central processing unit.

It should be noted that content such as information exchange and an execution process between modules/or components of the communication apparatus is based on a same concept as the method embodiments corresponding to FIG. 4 to FIG. 10 in this application. For specific content, refer to the descriptions in the foregoing method embodiments of this application. Details are not described herein again.

It should be noted that, for a specific implementation of the communication apparatus and beneficial effects brought by the communication apparatus, refer to descriptions in the method embodiments corresponding to FIG. 4 to FIG. 10. Details are not described herein again.

An embodiment of this application further provides a processing apparatus. The processing apparatus includes a processor and an interface. The processor is configured to perform the finite field encoding or decoding method in any one of the foregoing method embodiments.

It should be understood that the processing apparatus may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor and exist independently.

Herein, "implemented by using hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an application-specific integrated circuit (application-specific integrated circuit, ASIC) or a programmable logic device (programmable logic device, PLD). The PLD may further include a field programmable gate array (field programmable gate array, FPGA), a complex programmable logic device (complex programmable logic device, CPLD), and the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a system-on-a-programmable-chip (system-on-a-programmable-chip, SoPC).

This application further provides a communication system, the communication system includes at least one or more of a transmit end, a receive end, and an intermediate node.

An embodiment of this application further provides a computer-readable storage medium, including instructions. When the instructions are run on a computer, the computer is enabled to control the network apparatus to perform any implementation shown in the foregoing method embodiments.

An embodiment of this application further provides a computer program product. The computer program product includes computer program code. When the computer program code is run on a computer, the computer is enabled to perform any implementation shown in the foregoing method embodiments.

An embodiment of this application further provides a chip system, including a memory and a processor. The memory is configured to store a computer program, and the processor is configured to invoke the computer program from the memory and run the computer program, so that a chip performs any implementation shown in the foregoing method embodiments.

An embodiment of this application further provides a chip system, including a processor. The processor is configured to invoke and run a computer program, so that a chip performs any implementation shown in the foregoing method embodiments.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or a part contributing to the conventional technology, or all or a part of the technical solutions may be implemented in a form of a software product. The computer software product is stored in a storage medium and includes several instructions for instructing a computer device (which may be a personal computer, a server, or a network device, and the like) to perform all or a part of the steps of the methods described in the embodiments of this application.

## Claims

1. A packet transmission method, wherein the method is applied to a network device, and the method comprises:
receiving, by the network device, a request message from a terminal device, wherein the request message comprises a first field, the first field indicates identity information of the terminal device, and the request message is used to request the terminal device to establish a communication connection to the network device; and
sending, by the network device, a notification message to a management platform, wherein the notification message comprises a second field, the second field indicates the terminal device, and the notification message indicates the management platform to establish a communication connection to an application server, so that the application server provides a service for the terminal device.

2. The method according to claim 1, wherein the method further comprises: performing, by the network device, compliance check on the terminal device based on the first field, wherein the compliance check comprises identity check and/or capability check.

3. The method according to claim 1 or 2, wherein the identity information of the terminal device comprises a vendor type of the terminal device and a device type of the terminal device.

4. The method according to any one of claims 1 to 3, wherein the second field is the same as the first field; or the second field is determined based on the first field.

5. The method according to claim 1, wherein the network device is connected to at least one plug-in card in a pluggable manner, the network device dynamically adds/deletes one or more service capabilities by adding/deleting the at least one plug-in card, and the service capability comprises one or more of the following: a communication frequency band, a communication protocol, a communication bandwidth, or a communication rate.

6. The method according to claim 5, wherein the plug-in card is configured to implement the method according to any one of claims 1 to 4.

7. A packet transmission method, wherein the method is applied to a terminal device, and the method comprises:
sending, by the terminal device, a request message to a network device, wherein the request message comprises a first field, the first field indicates identity information of the terminal device, the request message is used to request the terminal device to establish a communication connection to the network device, and the identity information of the terminal device comprises a vendor type of the terminal device and a device type of the terminal device.

8. The method according to claim 7, wherein the identity information of the terminal device further comprises an air interface MAC address of the terminal device.

9. The method according to claim 7 or 8, wherein the terminal device is an internet of things terminal device.

10. A packet transmission method, wherein the method is applied to a management platform, and the method comprises:
receiving, by the management platform, a notification message from a network device, wherein the notification message comprises a second field, the second field indicates a terminal device, the notification message indicates the management platform to establish a communication connection to an application server, the application server provides a service for the terminal device, the second field is determined by the network device based on a first field, and the first field indicates identity information of the terminal device; and
determining, by the management platform, the application server based on the second field.

11. The method according to claim 10, wherein the method further comprises:
sending, by the management platform, a first uplink packet to the application server, wherein the first uplink packet comprises the second field indicating the terminal device.

12. The method according to claim 11, wherein the first uplink packet further comprises a third field, the third field indicates a connection status between the terminal device and the network device, and the connection status comprises connection succeeded or connection disconnected.

13. The method according to claim 11 or 12, wherein when the terminal device establishes a connection to the network device by using a Bluetooth protocol, the first uplink packet further comprises an air interface MAC address of the terminal device.

14. The method according to any one of claims 10 to 13, wherein the first field and the second field indicate a vendor type of the terminal device and a device type of the terminal device.

15. The method according to any one of claims 10 to 13, wherein the identity information of the terminal device comprises a vendor type of the terminal device and a device type of the terminal device, and the second field is different from the first field.

16. The method according to any one of claims 10 to 15, wherein the method further comprises:
receiving, by the management platform, a first downlink packet from the application server, wherein the first downlink packet comprises the second field indicating the terminal device; and
generating, by the management platform, a second downlink packet based on the first downlink packet, wherein the second downlink packet comprises the second field, and a destination of the second downlink packet is the network device.

17. The method according to any one of claims 10 to 16, wherein the determining, by the management platform, the application server based on the second field comprises:
determining, by the management platform, the vendor type of the terminal device and the device type of the terminal device based on the second field;
determining, by the management platform, the application server based on the vendor type of the terminal device and the device type of the terminal device; and
generating, by the management platform, an association relationship between the terminal device, the network device, and the application server.

18. A packet transmission method, wherein the method is applied to a network device, and the method comprises:
receiving, by the network device, a request message from a terminal device, wherein the request message comprises a first field, the first field indicates identity information of the terminal device, and the request message is used to request the terminal device to establish a communication connection to the network device;
determining, by the network device, an application server based on the request message, wherein the application server provides a service for the terminal device; and
sending, by the network device, a first uplink packet to the application server, wherein the first uplink packet comprises a second field, and the second field indicates the terminal device.

19. The method according to claim 18, wherein the network device performs compliance check on the terminal device based on the first field, and the compliance check comprises identity check and/or capability check.

20. The method according to claim 18 or 19, wherein the identity information of the terminal device comprises a vendor type of the terminal device and a device type of the terminal device.

21. The method according to any one of claims 18 to 20, wherein the second field is the same as the first field; or
the second field is determined based on the first field.

22. The method according to any one of claims 18 to 21, wherein the first uplink packet further comprises a third field, the third field indicates a connection status between the terminal device and the network device, and the connection status comprises connection succeeded or connection disconnected.

23. The method according to any one of claims 18 to 22, wherein when the terminal device establishes a connection to the network device by using a Bluetooth protocol, the first uplink packet further comprises an air interface MAC address of the terminal device.

24. The method according to any one of claims 18 to 23, wherein the method further comprises:
receiving, by the network device, a first downlink packet from the application server, wherein the first downlink packet comprises the second field indicating the terminal device; and
generating, by the network device, a second downlink packet based on the first downlink packet, wherein a destination of the second downlink packet is the terminal device.

25. The method according to any one of claims 18 to 24, wherein the determining, by the network device, an application server based on the request message comprises:
determining, by the network device, the vendor type of the terminal device and the device type of the terminal device based on the request message;
determining, by the network device, the application server based on the vendor type of the terminal device and the device type of the terminal device; and
generating, by the network device, an association relationship between the terminal device, the network device, and the application server.

26. The method according to any one of claims 18 to 25, wherein the network device is connected to at least one plug-in card in a pluggable manner, the network device dynamically adds/deletes one or more service capabilities by adding/deleting the at least one plug-in card, and the service capability comprises one or more of the following: a communication frequency band, a communication protocol, a communication bandwidth, or a communication rate.

27. The method according to claim 26, wherein the plug-in card is configured to implement the method according to any one of claims 18 to 25.

28. A communication apparatus, comprising:
a transceiver module, configured to receive a request message from a terminal device, wherein the request message comprises a first field, the first field indicates identity information of the terminal device, and the request message is used to request the terminal device to establish a communication connection to a network device, wherein
the transceiver module is further configured to send a notification message to a management platform, wherein the notification message comprises a second field, the second field indicates the terminal device, and the notification message indicates the management platform to establish a communication connection to an application server, so that the application server provides a service for the terminal device.

29. A communication apparatus, comprising:
a transceiver module, configured to send a request message to a network device, wherein the request message comprises a first field, the first field indicates identity information of a terminal device, the request message is used to request the terminal device to establish a communication connection to the network device, and the identity information of the terminal device comprises a vendor type of the terminal device and a device type of the terminal device.

30. A communication apparatus, comprising:
a transceiver module, configured to receive a notification message from a network device, wherein the notification message comprises a second field, the second field indicates a terminal device, the notification message indicates a management platform to establish a communication connection to an application server, the application server provides a service for the terminal device, the second field is determined by the network device based on a first field, and the first field indicates identity information of the terminal device; and
a processing module, configured to determine the application server based on the second field.

31. A communication apparatus, comprising:
a transceiver module, configured to receive a request message from a terminal device, wherein the request message comprises a first field, the first field indicates identity information of the terminal device, and the request message is used to request the terminal device to establish a communication connection to a network device; and
a processing module, configured to determine an application server based on the request message, wherein the application server provides a service for the terminal device, wherein
the transceiver module is further configured to send a first uplink packet to the application server, wherein the first uplink packet comprises a second field, and the second field indicates the terminal device.

32. A communication apparatus, wherein the communication apparatus comprises a memory and a processor; and
the processor is configured to execute a computer program or instructions stored in the memory, to enable the communication apparatus to perform the method according to any one of claims 1 to 6, claims 7 to 9, claims 10 to 17, or claims 18 to 27.

33. A chip system, wherein the chip system comprises at least one processor, the processor is configured to execute a computer program or instructions stored in a memory, and when the computer program or the instructions are executed by the at least one processor, the method according to any one of claims 1 to 6, claims 7 to 9, claims 10 to 17, or claims 18 to 27 is implemented.

34. A communication system, wherein the communication system comprises a terminal device, a network device, and a management platform;
the terminal device is configured to implement the method according to any one of claims 1 to 6;
the network device is configured to implement the method according to any one of claims 7 to 9; and
the management platform is configured to implement the method according to any one of claims 10 to 17.

35. A communication system, wherein the communication system comprises a terminal device and a network device;
the terminal device is configured to implement the method according to any one of claims 1 to 6; and
the network device is configured to implement the method according to any one of claims 18 to 27.
